# EUROPÄISCHE PATENTSCHRIFT

(11) **EP 2 958 385 B1**
(45) Veröffentlichungstag und Bekanntmachung des Hinweises auf die Patenterteilung: **08.03.2017**
(21) Anmeldenummer: 15172305.3
(22) Anmeldetag: 16.06.2015
(51) Int. Cl.: H04W 64/00, H04B 17/318, G01S 5/00, G01S 5/02

(54) **VERFAHREN ZUR ERZEUGUNGS VON ORTUNGSDATEN, VERFAHREN ZUR ORTUNG EINES KOMMUNIKATIONSENDGERÄTS SOWIE KOMMUNIKATIONSENDGERÄT**
METHOD FOR CREATION OF LOCATION DATA, METHOD FOR LOCATING A COMMUNICATION TERMINAL AND COMMUNICATION TERMINAL
PROCÉDÉ DE CREATION DES DONNÉES DE LOCALISATION, PROCÉDÉ DE LOCALISATION D'UN TERMINAL DE COMMUNICATION ET TERMINAL DE COMMUNICATION

(30) Priorität: 20.06.2014 DE 102014108658
(43) Veröffentlichungstag der Anmeldung: 23.12.2015
(73) Patentinhaber: Vodafone GmbH, 40549 Düsseldorf (DE)
(72) Erfinder: Josefiak, Dr., Frank, 53177 Bonn (DE)
(74) Vertreter: Müller & Schubert

(56) Entgegenhaltungen:
- DE-A1- 10 142 954
- US-A1- 2006 015 503

## Beschreibung

Die vorliegende Erfindung betrifft zunächst Verfahren zur Erzeugung von Ortungsdaten für die Ortung eines mobilen Kommunikationsendgeräts in einem zellularen Kommunikationsnetz. Weiterhin betrifft die Erfindung ein Verfahren zur Ortung eines mobilen Kommunikationsendgeräts in einem zellularen Kommunikationsnetz. Schließlich betrifft die Erfindung auch ein mobiles Kommunikationsendgerät, das für eine Ortung in einem zellularen Kommunikationsnetz geeignet ist.

Zellulare Kommunikationsnetze sind bekannt und bestehen ganz allgemein aus einer Anzahl von Zellen, wobei jede Zelle einer an einem definierten Standort befindlichen Basisstation zugeordnet ist. Bei solchen zellularen Kommunikationsnetzen handelt es sich beispielsweise um Mobilfunknetze.

Die technische Möglichkeit, mobile Kommunikationsendgeräte zu lokalisieren und damit zu orten, hat in der Vergangenheit eine starke Entwicklung genommen und zu einer Reihe unterschiedlicher Dienste geführt.

Die Grundlage für die im Folgenden beschriebene Entwicklung ist insbesondere der Wunsch nach höherer Transparenz innerhalb logistischer Netzwerke und den darin enthaltenen Beschaffungsketten seitens der Logistik.

Ein wesentlicher Hauptbestandteil jeder logistischen Lieferkette ist der Prozess der Ortsveränderung von logistischen Gütern, was als Transport bezeichnet wird. Zur Veränderung des Ortes ist stets eine Distanz zu überbrücken. Daher ist die physikalische Größe des Weges eine Variable eines Transportes. In Abhängigkeit des Weges vergeht eine bestimmte Zeit für den Prozess der Ortsveränderung. Also ist die Zeit, neben dem Weg, eine weitere Variable für den Transportprozess von Gütern. Aus diesen beiden genannten Variablen leitet sich die Geschwindigkeit her, die als ein entscheidendes Merkmal für die Effizienz einer Beschaffungskette der Logistik zu betrachten ist.

Güter in der Seefrachtlogistik befinden sich in aller Regel in Containern, deren Außenmaße standardisiert sind. Derartige Container befinden sich in aller Regel nicht im Besitz des Kunden, Lieferanten oder Logistikdienstleisters. Vielmehr befinden sich die Container im Besitz der Reedereiunternehmen. Hierbei sind die Container meist nach Durchführung eines Transportauftrags wieder zurück zu geben. In diesem Umfeld werden derzeit mehr als 20 Millionen Container über Transportzeiten von bis zu 80 Tagen - inklusive dem zu- und abführenden Landtransport - bewegt. Während der Zeit des Transports sind die Container für den Versender, Empfänger, Logistiker sowie für den Eigentümer quasi unsichtbar. Das heißt, weder der aktuelle Aufenthaltsort noch die Zeit sind verlässlich in Erfahrung zu bringen, was neben den klassischen Problemen wie Schwund, Verlust und Diebstahl von sowohl der Ware in den Containern als auch von den Containern selbst vor allem große Nachteile in der Verwaltung der Bestände mit sich bringt. Diese Nachteile beziehen sich beispielsweise auf Suchzeiten nach einzelnen Containern, Allokationsproblemen, Bedarfsdeckungsproblemen sowie mangelndem Lagerplatz, nicht optimierten Lagerhaltungskosten und einem generell sehr hohen Kommunikationsaufwand und damit verbundenen Kosten, um Informationen über den aktuellen Standort der Container zu erhalten.

In der Vergangenheit ist deshalb bereits intensiv nach Lösungen gesucht worden, um diese Intransparenzen zu akzeptablen Grenzkosten zu beseitigen. Bislang konnten aber noch keine universellen Lösungen geschaffen werden. Entweder sind die auf dem Markt verfügbaren Lösungen signifikant zu teuer, technisch nicht ausgereift, operativ zu kompliziert zu installieren oder von den Kommunikationsanforderungen her zu anspruchsvoll beziehungsweise zu riskant, was die Höhe der entstehenden Kommunikationskosten betrifft. Der Schwerpunkt aller derzeitigen Container-Verfolgungstechnologien liegt auf der Überwachung der Fracht, statt auf der Überwachung der Container inklusive der beinhalteten Fracht. Eine einfache, kostengünstige, gut zu skalierende und einfach zu installierende Variante, welche sowohl Hardwareseitig als auch Kommunikationskostenseitig weltweit einsetzbar wäre, existiert bisher nicht.

Mit der Etablierung der zellularen Kommunikationsnetze haben sich neue Möglichkeiten ergeben, Kommunikationsendgeräte, die zur Kommunikation innerhalb der zellularen Kommunikationsnetze ausgebildet sind, mit den in den Kommunikationsnetzen zur Verfügung stehenden Mitteln zu orten.

Eine Übersicht über den allgemeinen Stand der gegenwärtigen Technik lässt sich am einfachsten unterteilt darstellen. Dabei muss auf der einen Seite die technische Hardwareseite betrachtet werden, welche sich mit den gegenwärtig auf dem Markt angebotenen technischen Endgerätlösungen beschäftigt. Auf der anderen Seite müssen auch die bereits zur Verfügung stehenden Ortungstechnologien berücksichtigt werden.

Gerade im Umfeld der T&T (Tracking & Tracing) Anwendung für die Container Logistik fallen RFID Systeme aufgrund der sehr hohen globalen Infrastrukturanwendungen aus. Aufgrund der Kommunikationskosten und der Line of Sight Problematik werden Satellitenortungsverfahren zwar eingesetzt, jedoch aufgrund der Kosten und der Positionsbeeinflussung sowie gerade durch den Energiebedarf nur auf einzelnen Strecken zur Frachtüberwachung und in der Regel nicht für die Überwachung von Containern selbst eingesetzt. Die Verwendung von GPS/GSM beziehungsweise GPS/GPRS Systemen hat sich faktisch bisher am stärksten verbreitet, wobei zur Ortung der eingebaute GPS Chip die aktuelle Position abfragt und diese dann beispielsweise über einen GSM Kanal als SMS oder über GPRS als TCP/IP Message an einen Server versendet. Je nach Land, in dem das System eingesetzt wird, und je nach Kommunikationskanal entstehen unterschiedlich hohe Kosten durch den Betrieb. Sollte zur Ortung kein GPS verwendet werden können, oder sollten die Kosten für Antenne und Chip eingespart werden, kann alternativ auch über die Funkzelle eines zellularen Kommunikationsnetzes geortet werden. Diese Mobilfunknetz-abhängigen Ortungsverfahren bestimmen aus den Informationen des Standort- und des Besucherverzeichnisses die Funkzelle in der sich der Benutzer, beziehungsweise das dem Benutzer zugeordnete Kommunikationsendgerät befindet. Diese Technik ist generell bekannt als Cell-Identification (Cell-ID) oder Cell of Origin (COO)-Ortung. Diese Art der Ortung ist jedoch relativ ungenau und abhängig von der Funkzellengröße. Eine Verbesserung der Ortungsgenauigkeit kann durch eine zusätzliche Feldstärkemessung, der Received Signal Strength (RSS), erfolgen. Die damit erzielbaren Ortungsgenauigkeiten liegen je nach Funkzellengröße etwa zwischen 200 m und 10 km.

Eine Erweiterung zu der vorgenannten Ortungslösung sieht vor, dass für die Ortung die Laufzeit zwischen den Signalen von mindestens drei benachbarten Basisstationen im Kommunikationsendgerät erfasst und an die Basisstation gesendet wird. Hierzu existieren bereits mehrere Arten von Verfahren, die auf dieser Basis arbeiten. Hierzu gehören beispielsweise Time of Arrival (ToA)-Verfahren, Time Difference of Arrival (TDoA)-Verfharen und Angle of Arrival (AoA)-Verfahren. Zur Verbesserung der Positionsgenauigkeit wird in GSM-Netzen in Verbindung mit General Packet Radio Service (GPRS) das so genantne Enhanced Observed Time Difference (E-OTD)-Verfahren eingesetzt. In UMTS heißt das entsprechende Verfahren Observed Time Difference of Arrival (OTDOA)-Verfahren. Es bietet eine Verbesserung der Ortungsgenauigkeit auf 30 m bis 50 m, was auch damit zusammenhängt, dass UMTS kleinere Funkzellen hat. Zentral hierbei ist, dass das mobile Kommunikationsendgerät diese Berechnung lokal durchführt und dann per GSM, GPRSU/UMTS oder ähnlichem übermittelt. Hierbei entstehen erneut Kommunikationskosten durch Nutzung eines Kommunikationskanals.

Weiterhin existieren im allgemeinen Stand der Technik bereits indirekte Ortungsverfahren, die auf einem ähnlichen Ansatz beruhen wie die vorstehend genannten Verfahren. Die Messung von mindestens drei Cell-IDs wird dabei von dem mobilen Kommunikationsendgerät erfasst und an den Provider des zellularen Kommunikationsnetzes übertragen, der dann wiederum die Ortung berechnet und die Ergebnisse auf das Kommunikationsendgerät zurück überträgt. Hierbei werden dann sogar zwei Kommunikationswege begangen, da das Kommunikationsendgerät die Information über seinen Standort auf diesem Wege erhält.

In der WO 99/34611 A2 ist ein Verfahren zur Verfolgung eines mobilen Kommunikationsendgeräts in einem zellularen Kommunikationsnetz beschrieben. Dabei wählt sich das Kommunikationsendgerät in eine Funkzelle ein und auch wieder aus. Dadurch kann die Funkzelle erkant werden, in der sich das Kommunikationsendgerät befunden hat. Da Funkzellen unterschiedlich groß ausgebildet sind und teilweise eine große Abdeckung von mehreren Kilometern haben können, kann mit dem bekannten Verfahren die Ortung des mobilen Kommunikationsendgeräts nur sehr grob erfolgen.

In der DE 10 2005 041 453 A1 wird ein Verfahren zur Ortung eines mobilen Endgerätes in einer Mehrzellenfunkanordnung offenbart. Bei diesem Verfahren initiiert eine zentrale Einrichtung die Ortung, indem sie angeschlossene Funkbasisstationen in einen Messzustand versetzt, so dass die Funkbasisstationen Testdaten an das zu ortende mobile Endgerät senden können. Durch die gesendeten Testdaten wird das mobile Endgerät dazu veranlasst, eine Antwortnachricht an die Funkbasisstationen zu senden, wodurch eine Registrierung der resultierenden Empfangsfeldstärken an den Standorten der Funkbasisstationen ermöglicht wird. Die für das mobile Endgerät gemessenen Empfangsfeldstärken werden anschließend von der zentralen Einrichtung bei den Funkbasisstationen abgefragt, so dass mit diesen Informationen durch ein Triangulationsverfahren eine Ortsinformation berechnet werden kann. Nachteilig bei diesem bekannten Verfahren ist der benötigte Energieverbrauch auf dem Kommunikationsendgerät, da durch die bestehende Verbindung Energie benötigt und verbraucht wird.

In der DE 103 07 592 A1 ist ein Verfahren zur Lokalisierung eines mobilen Kommunikationsendgerätes beschrieben. Hierzu sendet das Kommunikationsendgerät eine Anforderungsnachricht für einen Kommunikationskanal an eine benachbarte Basisstation, welche eine Rückmeldung an das mobile Endgerät sendet, in welcher eine als TA-Wert bezeichnete auftretende Zeitverzögerung enthalten ist. Dieser Vorgang wird zumindest bei zwei weiteren benachbarten Basisstationen durchgeführt, so dass sich durch die erhaltenen TA-Werte mittels einer Triangulationsberechnung die Position des mobilen Endgerätes bestimmen lässt. Auch bei dieser bekannten Lösung werden Testnachrichten zwischen dem Kommunikationsendgerät und einer Zentrale des Kommunikationsnetzes versendet, wodurch Kosten, zumindest aber ein erhöhter Energieverbrauch entstehen.

In der US 2006/0015503 A1 ist eine Lösung beschrieben, wie die Positionsänderung eines mobilen Endgeräts verfolgt werden kann. In einer Infrastruktur existieren verschiedene Stationen, mit denen das mobile Endgerät nacheinander kommuniziert. Dabei werden das mobile Endgerät charakterisierende Informationen an die jeweiligen Stationen gesendet, die anschließend mit einem Zeitstempel versehen und in einer Datenbank abgespeichert werden.

Zentrale Ortungsverfahren, welche ohne kostenpflichtige Daten- oder Informationsübertragung und mit minimalem Energiebedarf die globale Ortung eines Objektes mit einer Genauigkeit kleiner 200 Meter erlauben, existieren bisher noch nicht.

Auch auf der Hardwareseite existieren gegenwärtig bereits eine Vielzahl unterschiedlicher Echtzeit-Ortungssysteme. Grundsätzlich existieren auf WLAN, RFID, NFC und dergleichen basierende Ortungssysteme, die aber im Bereich der Containerlogistik nur in bestimmten Fällen, und dann auch nur lokal sehr begrenzt, einsetzbar sind. Dennoch werden auch auf dem Gebiet der Containerlogistik derzeit bereits verschiedene Ortungssysteme eingesetzt. Grundsätzlich lassen sich Satellitengestützte Systeme von GSM/GPRS gestützten Systemen unterscheiden. Während Satellitengestützte Systeme vor allem auf Einzelsendungsebene Verwendung finden, inklusive der Überwachung von Temperatur, Luftfeuchte, Schock oder ähnlichem, konnten sich GPS/GSM Systeme deutlich stärker durchsetzen. Aufgrund der hohen Hardwarekosten in Verbindung mit den nicht unerheblichen Kommunikationskosten sind diese bekannten Lösungen in der Regel jedoch Nischenlösungen geblieben, welche sich nicht global durchsetzen konnten.

Zusammenfassend kann deshalb festgehalten werden, dass es gegenwärtig keine Möglichkeit gibt, Container in größerer Stückzahl langfristig und kostengünstig in Echtzeit zu verfolgen. Dies liegt zum einen daran, dass es keine Kommunikations- und Ortungsverfahren gibt, welche eine günstig globale Kommunikation und Ortung ermöglichen. Zudem ist derzeit keine Hardware auf dem Markt verfügbar, die dies zu ebenfalls überschaubaren Kosten ermöglicht. Durch die gegenwärtige Situation ist es einem Logistiker, Reeder oder Logistikkunden nicht möglich, kostengünstig Transparenz für einen Transport zu bekommen.

Ausgehend vom genannten Stand der Technik liegt der vorliegenden Erfindung die Aufgabe zugrunde, Lösungen für die Ortung von mobilen Kommunikationsendgeräten in zellularen Kommunikationsnetzen bereitzustellen, mit denen die vorgenannten Nachteile vermieden werden können. Insbesondere sollen Lösungen bereitgestellt werden, die eine einfache, kostengünstige, gut zu skalierende und einfach zu installierende Ortungsmöglichkeit bieten, und bei denen eine Ortung ohne kostenpflichtige Daten- oder Informationsübertragung und mit minimalem Energiebedarf erfolgen kann.

Diese Aufgabe wird erfindungsgemäß gelöst durch das Verfahren zur Erzeugung von Ortungsdaten für die Ortung eines mobilen Kommunikationsendgeräts in einem zellularen Kommunikationsnetz mit den Merkmalen gemäß dem unabhängigen Patentanspruch 1, das Verfahren zur Erzeugung von Ortungsdaten für die Ortung eines mobilen Kommunikationsendgeräts in einem zellularen Kommunikationsnetz mit den Merkmalen gemäß dem unabhängigen Patentanspruch 5, das Verfahren zur Ortung eines mobilen Kommunikationsendgeräts in einem zellularen Kommunikationsnetz mit den Merkmalen gemäß dem unabhängigen Patentanspruch 9 sowie das Kommunikationsendgerät mit den Merkmalen gemäß dem unabhängigen Patentanspruch 14. Weitere Merkmale und Details der Erfindung ergeben sich aus den Unteransprüchen, der Beschreibung sowie den Zeichnungen. Offenbarungen in Bezug auf einzelne der genannten Erfindungsaspekte gelten dabei selbstverständlich stets auch im Zusammenhang mit den übrigen Erfindungsaspekten, und jeweils umgekehrt, so dass hinsichtlich der Offenbarung bezüglich eines Erfindungsaspekts jeweils vollinhaltlich und vollumfänglich auch auf die Offenbarung der anderen Erfindungsaspekte Bezug genommen wird, und jeweils umgekehrt.

Die vorliegende Erfindung, wie sie sich in den verschiedenen Erfindungsaspekten widerspiegelt, basiert auf der grundlegenden Erkenntnis, dass die Aufgabe sowohl durch ein neues Ortungsverfahren, als auch durch den Einsatz einer neuen Hardwarelösung gelöst wird.

Bevorzugt können die erfindungsgemäßen Ortungsverfahren und das erfindungsgemäße Kommunikationsendgerät, die nachfolgend im Detail beschrieben werden, für die Ortung von beweglichen Objekten eingesetzt werden. Dabei ist bevorzugt vorgesehen, dass ein erfindungsgemäßes Kommunikationsendgerät mit einem beweglichen Objekt in Verbindung gebracht wird, beispielsweise, in dem dieses am beweglichen Objekt, vorzugsweise unlösbar, befestigt wird.

Dabei ist die Erfindung nicht auf bestimmte Typen beweglicher Objekte beschränkt. Grundsätzlich kann die Erfindung für jegliche Art beweglicher Objekte eingesetzt werden. Beispielsweise kann es sich bei solchen beweglichen Objekten um Container, Anhänger, Auflieger, LKWs, Schiffe, Flugzeuge aber auch um Einzelsendungen, Boxen, Paletten, Kisten bis hin zu Briefen, und dergleichen handeln, wobei die vorliegende Erfindung nicht auf die genannten Einsatzgebiete beschränkt ist. Nachfolgend wird die vorliegende Erfindung zur Verdeutlichung der erfindungsgemäßen Zusammenhänge des Öfteren im Zusammenhang mit dem Einsatzgebiet bei Containern beschrieben. Dem Fachmann ist allerdings klar, dass die der vorliegenden Erfindung zugrundeliegende Technologie auch im Zusammenhang mit anderen Einsatzgebieten verwendet werden kann, so dass die vorliegende Erfindung nicht auf das genannte Einsatzgebiet beschränkt ist.

Die vorliegende Erfindung stellt insbesondere eine M2M (Machine to Machine)-Lösung bereit, mit der bestehende bewegliche Objekte, beispielsweise Container, insbesondere auch größere und große Containerparks, auf einfache und kostengünstige Weise ausgerüstet und vor allem auch nachgerüstet werden können. Dazu ist lediglich erforderlich, die beweglichen Objekte, beispielsweise die Container, mit entsprechenden Kommunikationsendgeräten auszustatten. Mit der vorliegenden Erfindung kann im Zusammenhang mit der Ortung und der Verfolgung von beweglichen Objekten, beispielsweise von Containern, eine höhere Transparenz und Sicherheit realisiert werden.

Das gesamte Erfindungskonzept besteht dabei aus zwei Teilbereichen. Neben einer alternativen, neuen Tracking-Hardware, bei der es sich um ein Kommunikationsendgerät handelt, besteht ein wesentlicher Teil der vorliegenden Erfindung auch in einem neuartigen Ortungsverfahren.

Alle Verfahren der verschiedenen Erfindungsaspekte laufen bevorzugt automatisch ab.

Die einzelnen Komponenten, die für die Durchführung der Verfahren erforderlich sind, können als elektronische Bauteile, elektrische Schaltungen oder aber auch als Softwarekomponenten ausgestaltet oder ausgebildet sein. Dies gilt auch für die einzelnen Komponenten des erfindungsgemäßen Kommunikationsendgeräts. Komponenten, die im Kommunikationsendgerät softwarebasiert ausgebildet sind, können bevorzugt Bestandteile der Firmware des Kommunikationsendgeräts sein, oder aber in der Firmware implementiert oder eingebettet sein.

Unter Firmware ist dabei generell eine Software zu verstehen, die in dem Kommunikationsendgerät eingebettet und damit funktional fest mit dem Kommunikationsendgerät verbunden ist. Das bedeutet, dass das eine ohne das andere nicht nutzbar ist. Die Firmware nimmt somit eine Zwischenstellung zwischen den physikalischen Komponenten des Kommunikationsendgeräts, die man als Hardware bezeichnen kann, und der Anwendungssoftware auf dem Kommunikationsendgerät ein.

Alle Erfindungsaspekte der vorliegenden Erfindung basieren auf dem gemeinsamen technischen Grundgedanken, dass das Kommunikationsendgerät nacheinander eine Verbindung zu einer Anzahl von zwei oder mehr Funkzellen mit gleicher oder unterschiedlicher Feldstärke herstellt, dass das Kommunikationsendgerät für eine definierte Zeitdauer die Verbindung mit der jeweiligen Funkzelle beibehält, und dass nach Ablauf der definierten Zeitdauer das Kommunikationsendgerät die Verbindung zu der Funkzelle wieder abbricht und eine Verbindung zur nächsten Funkzelle herstellt. Dies stellt die Grundlage für die Ortungsdaten dar, auf der die spätere Ortung des Kommunikationsendgeräts basiert.

Dabei ist die Erfindung grundsätzlich nicht auf bestimmte Arten der Verbindungsherstellung beschränkt. Die Herstellung einer Verbindung soll insbesondere bedeuten, dass das Kommunikationsendgerät mit der Funkzelle, insbesondere mit der für die Funkzelle zuständigen Basisstation, in Kontakt tritt. Insbesondere geht die Verbindungsherstellung des Kommunikationsendgeräts zur Funkzelle nur so weit, dass noch keine kostenpflichtige Daten- oder Informationsübertragung entsteht, zustande kommt und erfolgt.

Erfindungsgemäß ist vorgesehen, dass das Kommunikationsendgerät die Verbindung zu der Funkzelle herstellt, diese Verbindung dann für eine bestimmte Zeitdauer beibehält und nach Ablauf der bestimmten Zeitdauer die Verbindung dann wieder beendet, das heißt abbricht. Dabei ist insbesondere vorgesehen, dass die Dauer der Verbindung so kurz bemessen ist, dass während der Verbindung noch keine kostenpflichtige Daten- oder Informationsübertragung erfolgt.

Dies soll anhand eines bevorzugten Ausführungsbeispiels verdeutlicht werden. Wenn ein Kommunikationsendgerät, beispielsweise ein Mobiltelefon, mit einer Funkzelle, insbesondere mit der für die Funkzelle zuständigen Basisstation, in Kontakt tritt, werden in einer ersten Phase zunächst die Parameter für die spätere, eigentliche Daten- oder Informationsübertragung ausgehandelt. Dieser Prozess, der dem Fachmann als "Handshake" geläufig ist, ist noch nicht kostenpflichtig und dauert in der Regel nur eine kurze Zeit. Bevorzugt ist die Zeitdauer, für die das Kommunikationsendgerät mit der Funkzelle die Verbindung beibehält, so bemessen, dass sie kleiner oder gleich der Zeitdauer für den vorgenannten Prozess ist, so dass auf jeden Fall sichergestellt ist, dass noch keine kostenpflichtige Daten- oder Informationsübertragung erfolgt ist. Beispielsweise kann man unter Verbindungsherstellung auch verstehen, dass sich das Kommunikationsendgerät in eine Funkzelle einwählt. Der Abbruch der Verbindung würde dann bedeuten, dass sich das Kommunikationsendgerät aus der besagten Funkzelle wieder auswählt. Dabei geht die Einwahl aber nur so weit, dass noch keine kostenpflichtige Daten- oder Informationsübertragung entsteht, zustande kommt und erfolgt.

Die eigentliche Ortung des Kommunikationsendgeräts erfolgt dabei nicht innerhalb des Kommunikationsendgeräts, und dadurch durch das Kommunikationsendgerät selbst, sondern netzwerkseitig, insbesondere zentral auf Seiten des Betreibers des zellularen Kommunikationsnetzes. Dabei ist das Verfahren nicht darauf beschränkt, dass es nur innerhalb eines einzigen Kommunikationsnetzes stattfindet. Es kann übergreifend auch unter Zuhilfenahme von Kommunikationsnetzen unterschiedlicher Betreiber durchgeführt werden, wobei in diesem Fall die einzelnen Kommunikationsnetze bevorzugt vom gleichen Netztyp sind. Beispielsweise können im Fall mehrere Kommunikationsnetze alle Netze Mobilfunknetze sein.

Dabei ist seitens des Kommunikationsendgeräts keine kostenpflichtige Daten- oder Sprachverbindung in das zellulare Kommunikationsnetz erforderlich, so dass keine Kommunikationskosten entstehen, was sich zusätzlich auch positiv auf den Energieverbrauch des Kommunikationsendgeräts auswirkt. Weder entstehen Ortungskosten, beispielsweise durch Verwendung eines GPS Chips, durch die Zahlung von Lizenzgebühren oder dergleichen, noch entstehen Kommunikationskosten wegen des Wegfalls der kostenpflichtigen Daten und Informationsübertragung.

Gemäß dem ersten Aspekt der Erfindung wird ein Verfahren zur Erzeugung von Ortungsdaten für die Ortung eines mobilen Kommunikationsendgeräts in einem zellularen Kommunikationsnetz, wobei das Kommunikationsnetz aus einer Anzahl von Funkzellen besteht, bereitgestellt, das dadurch gekennzeichnet ist, dass das Kommunikationsendgerät nacheinander eine Verbindung zu einer Anzahl von zwei oder mehr Funkzellen mit gleicher und/oder unterschiedlicher Feldstärke herstellt, dass das Kommunikationsendgerät für eine definierte Zeitdauer die Verbindung mit der jeweiligen Funkzelle beibehält, und dass nach Ablauf der definierten Zeitdauer das Kommunikationsendgerät die Verbindung zu der Funkzelle wieder abbricht und eine Verbindung zur nächsten Funkzelle herstellt.

Dieses Verfahren gemäß dem ersten Erfindungsaspekt wird durch das Kommunikationsendgerät ausgeführt.

Das Verfahren ist gerichtet auf die Erzeugung von Ortungsdaten. Das bedeutet, dass dieses Verfahren verwendet wird, damit Ortungsdaten geschaffen werden können. Das heißt nicht unbedingt, dass derartige Ortungsdaten das unmittelbare Ergebnis des Verfahrens sein müssen. Das Verfahren kann auch indirekt an der Erzeugung beziehungsweise Schaffung der Ortungsdaten beteiligt sein, etwa wenn die durch das Verfahren erzeugten Daten in weitergehenden Schritten anschließend noch weiter bearbeitet werden müssen, bis letztendlich die fertigen Ortungsdaten vorliegen. Das heißt, die Erzeugung von Ortungsdaten gemäß dem ersten Aspekt der vorliegenden Erfindung schließt auch ein, dass damit die Voraussetzungen geschaffen werden, damit letztendlich Ortungsdaten erzeugt werden.

Die zu erzeugenden Ortungsdaten dienen für die Ortung eines mobilen Kommunikationsendgeräts. Das bedeutet, dass die Ortungsdaten geeignet sein müssen damit darauf basierend ein Ortungsverfahren durchgeführt werden kann. Die Ortung des Kommunikationsendgeräts stellt dabei insbesondere die Ermittlung des Ortes dar, an welchem sich das Kommunikationsendgerät zum Zeitpunkt der Ortung innerhalb des Kommunikationsnetzes befindet. Die Ortung des Kommunikationsendgeräts kann deshalb auch als Lokalisierung des Kommunikationsendgeräts bezeichnet werden.

Das Verfahren findet in einem zellularen Kommunikationsnetz statt, wobei das Kommunikationsnetz aus einer Anzahl von Funkzellen besteht. Bei einem solchen zellularen Kommunikationsnetz handelt es sich bevorzugt um ein Mobilfunknetz. Bei den zu ortenden Kommunikationsendgeräten handelt es sich um Endgeräte, die zur Verwendung in dem entsprechenden Kommunikationsnetz ausgebildet sind, beispielsweise um Mobilfunkendgeräte, etwa Mobiltelefone. Bevorzugt kann es sich in einem solchen Fall um ganz einfache Mobiltelefone handeln, die im Zusammenhang mit dem erfindungsgemäßen Kommunikationsendgerät weiter unten näher beschrieben sind, so dass an dieser Stele auf diese Ausführungen weiter unten vollinhaltlich Bezug genommen und verwiesen wird.

Ein zellulares Kommunikationsnetz ist ganz allgemein insbesondere dadurch gekennzeichnet, dass dieses eine Vielzahl von Kommunikationszellen in Form von Funkzellen mit jeweils mindestens einer Basisstation zur schnurlosen Kommunikation mit einer Vielzahl von Kommunikationsendgeräten aufweist. Dabei ist jede Kommunikationszelle einer Basisstation zugeordnet. Das heißt, jede Kommunikationszelle wird durch eine Basisstation, die sowohl als Sende- als auch als Empfangsstation fungiert, versorgt. Die Kommunikationsendgeräte kommunizieren nicht direkt untereinander, sondern über Mobilfunkantennen, die jeweils Bestandteile der Basisstationen sind. Eine Verbindung wird hergestellt, indem ein Funksignal in Form von elektromagnetischen Wellen vom Kommunikationsendgerät zur nächsten Mobilfunkantenne gesendet wird. Bevor es zu einer kostenpflichtigen Übertragung von Daten und Informationen kommt, wird insbesondere zunächst ein so genanntes Handshake-Verfahren durchgeführt, im Rahmen dessen die Parameter für die spätere kostenpflichtige Kommunikation ausgehandelt werden.

Eine Funkzelle eines zellularen Kommunikationsnetzes ist im allgemeinen der Bereich, in dem das von einer Sendeeinrichtung des Kommunikationsnetzes, beispielsweise des Mobilfunknetzes, gesendete Signal empfangen und fehlerfrei decodiert werden kann. Jede Funkzelle hat eine Funkzellen-ID, die auch als Cell-ID bezeichnet wird. Die Größe einer Funkzelle ist abhängig von meteorologischen und geografischen Gegebenheiten, Aufbauhöhe und Typ der verwendeten Antennen, der Sendeleistung und dem verwendeten Mobilfunkstandard. Die Größe der Zellen kann zwischen einigen Metern und einigen Kilometern, beispielsweise bis zu 35 km, liegen. Benachbarte Funkzellen, gleich welchen Standards, überlappen sich normalerweise. Dies hat insbesondere folgende Gründe: Endgeräten, die keine aktive Verbindung zum Netz haben, soll die Möglichkeit gegeben werden, sich bei schlechter werdender Versorgung eine neue Zelle auszuwählen. Endgeräten, die eine aktive Verbindung ins Netz haben, kann zur weiteren Kommunikation vom Netz eine neue Zelle zugewiesen werden, ohne dabei den Kommunikationsvorgang zu unterbrechen.

Erfindungsgemäß ist vorgesehen, dass das Kommunikationsendgerät nacheinander eine Verbindung zu einer Anzahl von zwei oder mehr Funkzellen mit gleicher und/oder unterschiedlicher Feldstärke herstellt.

Die Feldstärke einer Funkzelle hängt dabei insbesondere wesentlich von der Sendeleistung und -charakteristik der Antenne ab und verringert sich rasch mit zunehmendem Abstand. Die Feldstärke der Funkzelle ist insbesondere die Feldstärke, mit welcher das Kommunikationsendgerät Signale der Funkzelle, beziehungsweise der für die Funkzelle zuständigen Basisstation empfängt.

Die unterschiedlichen Feldstärken der Funkzellen sind insbesondere bezogen auf den aktuellen Standort des Kommunikationsendgeräts. An diesem Standort hat das Kommunikationsendgerät normalerweise Zugriff auf mehrere Funkzellen. Zum einen hat es Zugriff auf die Funkzelle, in der es sich tatsächlich befindet. Es hat aber auch Zugriff auf benachbarte Funkzellen. Das Kommunikationsendgerät kann somit mit Basisstationen verschiedener Funkzellen in Verbindung treten. Nicht alle Funkzellen haben dabei, wie vorstehend beschrieben, in Bezug auf das Kommunikationsendgerät die gleiche Feldstärke.

Das Kommunikationsendgerät stellt eine Verbindung zu den Funkzellen her. Das bedeutet insbesondere, dass eine Verbindung zu der Basisstation der jeweiligen Funkzelle hergestellt wird. Dabei ist insbesondere vorgesehen, dass während der Verbindung zu den jeweiligen Funkzellen noch keine kostenpflichtige Daten oder Informationenübertragung zustande kommt und erfolgt.

Erfindungsgemäß ist nunmehr vorgesehen, dass das Kommunikationsendgerät eine Verbindung nicht nur zu einer einzigen Funkzelle herstellt, sondern nacheinander zu einer Anzahl von Funkzellen, wobei die Erfindung nicht auf eine bestimmte Anzahl von Funkzellen beschränkt ist. Bevorzugte Ausführungsbeispiele hierzu werden weiter unten in größerem Detail beschrieben.

Hinsichtlich der Verbindungsherstellung können im Kommunikationsnetz vorhandene Standardprozeduren verwendet werden. die in den entsprechenden Kommunikationsnetz-Spezifikationen, beispielsweise in den Mobilfunknetz- Spezifikationen dargelegt sind, und die dem Fachmann geläufig sind.

Nach der Verbindungsherstellung behält das Kommunikationsendgerät für eine definierte Zeitdauer die Verbindung zu der jeweiligen Funkzelle bei. Dabei ist die Erfindung nicht auf bestimmte Verbindungsdauern beschränkt. Bevorzugte Ausführungsformen hierzu werden im weiteren Verlauf weiter unten näher beschrieben.

Nach Ablauf der definierten Zeitdauer bricht das Kommunikationsendgerät die Verbindung mit der Funkzelle wieder ab. Direkt im Anschluss daran stellt das Kommunikationsendgerät die Verbindung zur nächsten Funkzelle her. Der Verbindungsabbruch zu einer Funkzelle bewirkt, dass die Verbindung des Kommunikationsendgeräts zu der Funkzelle getrennt wird. Die Verbindungsherstellung und der Verbindungsabbruch können I dabei insbesondere über die im Kommunikationsendgerätbefindliche Firmware erfolgen beziehungsweise vorgenommen werden.

Bevorzugt kann das Kommunikationsendgerät bei Verbindungsherstellung zu einer Funkzelle oder während der Dauer der Verbindung eine Kennung des Kommunikationsgeräts übertragen. Dabei ist die Erfindung grundsätzlich nicht auf bestimmte Kennungen beschränkt. Wichtig ist lediglich, dass das Kommunikationsendgerät über die Kennung eindeutig charakterisiert beziehungsweise identifiziert werden kann. Handelt es sich bei dem Kommunikationsendgerät um ein Mobiltelefon und bei dem Kommunikationsnetz um ein Mobilfunknetz, kann es sich bei einer solchen Kennung beispielsweise um eine MSISDN (Mobile Subscriber Integrated Services Digital Network Number), eine SIM-ID oder dergleichen handeln. Dies wird im weiteren Verlauf der Beschreibung noch näher erläutert.

In einer bevorzugten Ausführungsform kann das Verfahren durch folgende Schritte gekennzeichnet sein:
a) Das Kommunikationsendgerät befindet sich in einem Bereitschaftsmodus;
b) Nach Ablauf eines Zeitintervalls, das heißt insbesondere am Ende des Zeitintervalls, welches in einer im Kommunikationsendgerät vorgesehenen Zeitgebereinheit festgelegt ist, erhält das Kommunikationsendgerät von der Zeitgebereinheit ein Triggersignal und wechselt von dem Bereitschaftsmodus in den Betriebsmodus;
c) Im Betriebsmodus stellt das Kommunikationsendgerät - insbesondere über ein im Kommunikationsendgerät vorgesehenes Kommunikationsmodul - nacheinander eine Verbindung zu einer Anzahl von zwei oder mehr Funkzellen mit unterschiedlicher Feldstärke her, und hält für die definierte Zeitdauer die Verbindung mit der jeweiligen Funkzelle bei;
d) Nach Ablauf der definierten Zeitdauer bricht das Kommunikationsendgerät die Verbindung mit der Funkzelle wieder ab und stellt eine Verbindung zur nächsten Funkzelle her,
e) Nach Abbruch der Verbindung zur letzten Funkzelle wechselt das Kommunikationsendgerät vom Betriebsmodus in den Bereitschaftsmodus zurück und verbleibt im Bereitschaftsmodus bis zum Ablauf des nächsten Zeitintervalls.

Das Zeitintervall ist dabei insbesondere wiederkehrend ausgebildet. Das heißt, dass das Zeitintervall nach dessen Ablauf jeweils erneut zu laufen beginnt.

Ein Zeitintervall ist dabei generell ein mehr oder weniger ausgedehnter Teil der Zeit in Form eines Zeitabstands, eines Zeitabschnitt, einer Zeitspanne, eines Zeitraums, einer Zeitphase, einer Zeitperiode oder dergleichen. Ein Zeitintervall hat einen Anfang und ein Ende.

Bei der vorgenannten Ausführungsform weist das Kommunikationsendgerät eine Zeitgebereinheit auf, die auch als Timer bezeichnet werden kann. Als Zeitgebereinheit wird dabei insbesondere ein Steuerbaustein bezeichnet, der zur Realisierung der unterschiedlichsten zeitbezogenen Funktionen eingesetzt wird. Derartige Zeitgebereinheiten können als Software oder als Hardware in Form einer elektronischen Schaltung realisiert werden und sind dem Fachmann an sich geläufig.

Nach Ablauf des Zeitintervalls, das heißt am Ende des Zeitintervalls, erhält das Kommunikationsendgerät ein Triggersignal. Der Ablauf des Zeitintervalls stellt dabei ein auslösendes Ereignis dar, aufgrund dessen das Kommunikationsendgerät einen Impuls in Form eines Signals, des Triggersignals, erhält, durch das ein Schaltvorgang erzeugt wird. Im vorliegenden Fall wird das Kommunikationsendgerät nach Erhalt des Triggersignals von einem Bereitschaftsmodus in einen Betriebsmodus geschaltet.

Der Bereitschaftsmodus, der auch als Standby-Modus oder Ruhemodus bezeichnet werden kann, ist dabei insbesondere der Zustand des Kommunikationsendgeräts, in dem die eigentliche Nutzfunktion temporär deaktiviert ist, aber jederzeit und ohne Vorbereitungen oder längere Wartezeiten wieder aktiviert werden kann. Für das Halten des Bereitschaftszustandes ist im Regelfall ein bestimmter, gegenüber dem Normalbetrieb reduzierter Leistungsbedarf notwendig. Sobald das Kommunikationsendgerät benutzt wird, etwa indem es ein Triggersignal erhält, wird das Kommunikationsendgerät in den Betriebsmodus gebracht, in dem es seine bestimmungsgemäßen Funktionen ausführt.

Nach Abbruch der Verbindung zur letzten Funkzelle wechselt das Kommunikationsendgerät, bevorzugt automatisch, aus dem Betriebsmodus zurück in den Bereitschaftsmodus. Das kann beispielsweise der Fall sein, wenn keine weiteren Funkzellen mehr erreichbar sind, oder aber wenn eine vorgegebene Anzahl von Funkzellen, zu denen das Kommunikationsendgerät eine Verbindung herstellen soll, und damit eine vorgegebene Wiederholung von Verbindungs-Herstellungsprozeduren, erreicht ist.

Ist das Kommunikationsendgerät in den Bereitschaftsmodus zurück gewechselt, verbleibt es in dem Bereitschaftsmodus bis zum erneuten Ablauf des Zeitintervalls, dass heißt bis zum Ablauf des nächsten Zeitintervalls.

In einer bevorzugten Ausführungsform ist vorgesehen, dass das Kommunikationsendgerät zunächst eine Verbindung zu einer ersten Funkzelle herstellt, welche, insbesondere in Bezug auf das Kommunikationsendgerät an seinem aktuellen Standort, die größte Feldstärke aufweist, dass das Kommunikationsendgerät nach Ablauf der definierten Zeitdauer die Verbindung zu der ersten Funkzelle abbricht, und dass das Kommunikationsendgerät anschließend eine Verbindung zu wenigstens einer weiteren Funkzelle herstellt, welche im Vergleich zur ersten Funkzelle eine gleiche und/oder schwächere Feldstärke aufweist.

Bevorzugt kann vorgesehen sein, dass das Kommunikationsendgerät nacheinander eine Verbindung zu einer Anzahl von drei oder mehr, bevorzugt zu bis zu neun Funkzellen unterschiedlicher Feldstärke herstellt. Grundsätzlich ist die Erfindung nicht auf eine bestimmte Anzahl von Funkzellen für die Einwahl beschränkt. Insbesondere gilt, dass so viele Funkzellen wie möglich in das Verfahren einbezogen werden sollen. Je mehr Funkzellen einbezogen werden, desto genauer ist später eine Ortung des Kommunikationsendgeräts möglich, wie weiter unten im Zusammenhang mit den weiteren Erfindungsaspekten im Detail beschrieben wird.

Nachfolgend wird zur Verdeutlichung ein Beispiel beschrieben, bei dem das Kommunikationsendgerät nacheinander eine Verbindung zu drei Funkzellen herstellt.

Zunächst stellt das Kommunikationsendgerät eine Verbindung zu einer ersten Funkzelle her, bei der es sich, insbesondere vom aktuellen Standort des Kommunikationsendgeräts aus gesehen, um die stärkste Funkzelle, dass heißt um die Funkzelle mit der größten Feldstärke, handelt. Nach einer definierten Zeitdauer, für die das Kommunikationsendgerät die Verbindung zu der ersten Funkzelle beibehält, bricht das Kommunikationsendgerät die Verbindung zu ersten Funkzelle wieder ab. Direkt im Anschluss stellt das Kommunikationsendgerät die Verbindung zu einer zweiten, zur ersten Funkzelle unterschiedliche Funkzelle ein, bei der es sich im Vergleich zur ersten Funkzelle um eine gleich starke oderschwächere Funkzelle, das heißt in eine Funkzelle mit gleicher oder schwächerer Feldstärke, handelt. Nach einer definierten Zeitdauer, in der das Kommunikationsendgerät die Verbindung zu der zweiten Funkzelle beibehält, bricht das Kommunikationsendgerät die Verbindung zu der zweiten Funkzelle wieder ab. Direkt im Anschluss stellt das Kommunikationsendgerät eine Verbindung zu einer dritten, zur ersten und zweiten Funkzelle unterschiedliche Funkzelle her, bei der es sich im Vergleich zur ersten und auch zur zweiten Funkzelle um eine gleich starke oder schwächere Funkzelle, das heißt in eine Funkzelle mit gleicher oder schwächerer Feldstärke, handelt. Nach einer definierten Zeitdauer, in der das Kommunikationsendgerät mit der dritten Funkzelle in Verbindung bleibt, bricht das Kommunikationsendgerät die Verbindung zu der dritten Funkzelle wieder ab und wird zurück in den Bereitschaftsmodus geschaltet.

Findet eine Verbindungsherstellung zu mehr als drei Funkzellen statt, wiederholt sich das Verfahren so oft, wie eine Verbindungsherstellung zu Funkzellen zu erfolgen hat. Dabei ist bevorzugt vorgesehen, dass eine Funkzelle, zu der das Kommunikationsendgerät eine Verbindung herstellt, stets eine im Vergleich zur vorangegangenen Funkzelle gleich starke oder schwächere Funkzelle, das heißt eine Funkzelle mit gleicher oder schwächerer Feldstärke, ist. Nach dem Verbindungsabbruch zu der letzten Funkzelle ist, insbesondere stets, vorgesehen, dass das Kommunikationsendgerät aus dem Betriebsmodus zurück in den Bereitschaftsmodus geschaltet wird.

In bevorzugter Ausgestaltung ist vorgesehen, dass das Zeitintervall, nach dessen Ablauf das Kommunikationsendgerät jeweils aus dem Bereitschaftsmodus in einen Betriebsmodus wechselt, in der Größenordnung von einer oder mehreren Stunden, oder in der Größenordnung von einem oder mehreren Tagen, liegt. Die Größe des Zeitintervalls bemisst sich insbesondere nach der Zeit und/oder der Geschwindigkeit, die/mit der das Kommunikationsendgerät im zellularen Kommunikationsnetz unterwegs ist. Wird das Verfahren im Zusammenhang mit der Ortung von Containern eingesetzt, kann das Zeitintervall beispielsweise 24 Stunden betragen. Das heißt, dass das Kommunikationsendgerät, das an einem entsprechenden Container angeordnet ist, alle 24 Stunden von dem Bereitschaftsmodus in den Betriebsmodus wechselt und die vorstehend geschilderten erfindungsgemäßen Einwahlprozeduren in die verschiedenen Funkzellen vornimmt.

Bevorzugt ist vorgesehen, dass das Kommunikationsendgerät die Verbindung zu einer Funkzelle für die definierte Zeitdauer zwischen 0.5 und 15 Sekunden, bevorzugt zwischen 2 und 10 Sekunden, bevorzugt zwischen 4 und 7 Sekunden, besonders bevorzugt von 5 Sekunden, beibehält. Grundsätzlich ist die Erfindung nicht auf bestimmte Zeitdauern beschränkt. Wichtig ist lediglich, dass die Zeitdauern so kurz bemessen sind, dass die nacheinander erfolgenden Verbindungs-Herstellungsprozeduren in die verschiedenen Funkzellen möglichst zeitnah und dicht aufeinander folgend durchgeführt werden, und dass während der Verbindung keine kostenpflichtige Daten- oder Informationsübertragung erfolgt. Nach unten sind die Zeitdauern systemtechnisch dadurch begrenzt, dass ausreichend Zeit bleiben muss, damit das Kommunikationsendgerät die Verbindung zu einer Funkzelle herstellen kann. Die definierten Zeitdauern sollen dabei insbesondere auch so kurz sein, dass das Kommunikationsendgerät die vorzunehmenden Verbindungs-Herstellungsprozeduren zu den verschiedenen Funkzellen vornehmen kann, ohne dass sich dessen aktueller Standort signifikant verändert, was eine Veränderung der Feldstärke einzelner Funkzellen in Bezug auf das Kommunikationsendgerät nach sich ziehen würde.

Bevorzugt wird das Verfahren durchgeführt, während sich das Kommunikationsendgerät in einem stationären Zustand befindet. "Stationär" bedeutet dabei insbesondere, dass das Kommunikationsendgerät während der Durchführung des Verfahrens stillsteht oder annähernd stillsteht. Dabei soll von einem stationären Zustand auch erfasst sein, dass sich das Kommunikationsendgerät im Vergleich zur Gesamtdauer der Einwahlprozeduren so langsam bewegt, dass sich dessen Bewegung nicht nachteilig auf das Verfahren auswirkt.

Das wie vorstehend beschriebene Verfahren gemäß dem ersten Erfindungsaspekt lässt sich ergänzend insbesondere auch wie folgt beschreiben.

Auf dem im Kommunikationsendgerät bereits integrierten Zeitgeber, beispielsweise einem Timer, ist ein Zeitintervall festgelegt, in welchem das Kommunikationsendgerät, beispielsweise ein einfaches Mobiltelefon, aus dem Bereitschaftsmodus, etwa dem Standby-Modus aufwachen soll. Nach dem Aufwachen stellt das Kommunikationsendgerät entsprechend den Standards, beispielsweise entsprechend des GSM Standards im Falle eines Mobilfunknetzes, eine Verbindung zu der stärksten Funkzelle eines beliebigen Providers her und entsprechend nach 5 Sekunden im Zustand "hergestellte Verbindung" bricht es die Verbindung wieder ab. Im Anschluss wird sich das Kommunikationsendgerät, beispielsweise mittels seiner Firmware, von der Funkzelle trennen und direkt eine Verbindung zur zweistärksten Zelle aufbauen, dort wieder 5 Sekunden erreichbar bleiben und sich erneut trennen. Dieser Vorgang sollte mindestens 3mal, bei Verfügbarkeit mehrerer Funkzellen so oft wie möglich, beispielsweise bis zu 9mal, erfolgen. Sollte entweder keine weitere Funkzelle erkannt werden, oder die Anzahl zu adressierender Funkzellen erreicht sein, bricht das Kommunikationsendgerät die Verbindung ab und geht zurück in den Bereitschaftsmodus, in welchem es bis zum erneuten Ablauf des internen Zeitgebers verbleibt. Auf diesem Wege lässt sich ein Ortungsintervall einfach festlegen und bei einem Zeitintervall von beispielsweise 24 Stunden könnte der Energieverbrauch des Kommunikationsendgeräts auf ein absolutes Minimum reduziert werden.

Gemäß einem zweiten Erfindungsaspekt wird ein Verfahren zur Erzeugung von Ortungsdaten für die Ortung eines mobilen Kommunikationsendgeräts in einem zellularen Kommunikationsnetz, wobei das Kommunikationsnetz aus einer Anzahl von Funkzellen besteht, und wobei jede Funkzelle einer an einem definierten Standort befindlichen Basisstation zugeordnet ist, bereitgestellt, das dadurch gekennzeichnet ist, dass netzwerkseitig nacheinander Verbindungs- Herstellungsprozeduren von einem Kommunikationsendgerät mit einer Anzahl von zwei oder mehr Funkzellen mit gleicher und/oder unterschiedlicher Feldstärke erfasst werden, indem das Kommunikationsendgerät mittels eines wie vorstehend beschriebenen Verfahrens gemäß dem ersten Erfindungsaspekt nacheinander eine Verbindung mit einer Anzahl von zwei oder mehr Funkzellen gleicher und/oder unterschiedlicher Feldstärke herstellt, dass nach der Verbindungsherstellung zu einer Funkzelle, netzwerkseitig eine Kennung des die Verbindung herstellenden Kommunikationsendgeräts mit einer Funkzellen-ID der Funkzelle verknüpft wird, dass zum Zeitpunkt der Verbindungsherstellung und/oder der Verbindungsabbruchs des Kommunikationsendgeräts mit einer Funkzelle ein Zeitstempel erzeugt wird, der mit der Kennung des Kommunikationsendgeräts und der Funkzellen-ID zu Ortungsdaten verknüpft wird, und dass die Ortungsdaten netzwerkseitig in einer zentralen Datenbank abgespeichert werden.

Das Verfahren des zweiten Erfindungsaspekts läuft dabei insbesondere netzwerkseitig ab. Das bedeutet, dass das Verfahren vom Betreiber des Kommunikationsnetzes durchgeführt wird. Dabei erhält der Netzbetreiber insbesondere Daten, die aus Verbindungs-Herstellungsprozeduren des Kommunikationsendgeräts stammen, welche insbesondere mit dem Verfahren gemäß dem ersten Erfindungsaspekt gewonnen wurden, so dass diesbezüglich zur Vermeidung von Wiederholungen hinsichtlich der Offenbarung vollinhaltlich auch auf die Ausführungen zum ersten Erfindungsaspekt Bezug genommen und verwiesen wird.

Gemäß dem Verfahren des zweiten Erfindungsaspekts werden netzwerkseitig nacheinander Verbindungs-Herstellungsprozeduren von einem Kommunikationsendgerät zu einer Anzahl von zwei oder mehr Funkzellen mit gleicher und/oder unterschiedlicher Feldstärke erfasst. Wenn das Kommunikationsendgerät eine Verbindung zu einer Funkzelle hergestellt hat, erhält das Kommunikationsnetz eine Kennung des Kommunikationsendgeräts, die vom Kommunikationsendgerät an die Funkzelle des Kommunikationsnetzes, zu der das Kommunikationsendgerät die Verbindung herstellt, übertragen wird. Handelt es sich bei dem Kommunikationsendgerät um ein Mobiltelefon und bei dem Kommunikationsnetz um ein Mobilfunknetz, kann es sich bei einer solchen Kennung beispielsweise um eine MSISDN (Mobile Subscriber Integrated Services Digital Network Number), eine SIM-ID oder dergleichen handeln. Dies wird im weiteren Verlauf der Beschreibung noch näher erläutert.

Nach der Verbindungsherstellung des Kommunikationsendgeräts mit der Funkzelle wird netzwerkseitig eine Kennung des die Verbindung herstellenden Kommunikationsendgeräts mit einer Funkzellen-ID der entsprechenden Funkzelle verknüpft. Zusätzlich wird zum Zeitpunkt der Verbindungsherstellung und/oder des Verbindungsabbruchs des Kommunikationsendgeräts netzwerkseitig ein Zeitstempel erzeugt, der netzwerkseitig mit der Kennung des Kommunikationsendgeräts und der Funkzellen-ID zu Ortungsdaten verknüpft wird. Anschließend werden die Ortungsdaten netzwerkseitig in einer zentralen Datenbank abgespeichert.

Analog zu den entsprechenden Ausführungen zum ersten Erfindungsaspekt, auf die vollinhaltlich Bezug genommen und verwiesen wird, werden die Verbindungs-Herstellungsprozeduren zu den zwei oder mehr Funkzellen mit gleicher und/oderunterschiedlicher Feldstärke bevorzugt im Abstand einer definierten Zeitdauer erfasst, wobei die definierte Zeitdauer insbesondere zwischen 0.5 und 15 Sekunden, bevorzugt zwischen 2 und 10 Sekunden, bevorzugt zwischen 4 und 7 Sekunden liegt, und besonders bevorzugt 5 Sekunden beträgt.

Analog zu den entsprechenden Ausführungen zum ersten Erfindungsaspekt, auf die vollinhaltlich Bezug genommen und verwiesen wird, wird netzwerkseitig bevorzugt zunächst eine Verbindungs-Herstellungsprozedur von dem Kommunikationsendgerät zu einer ersten Funkzelle, welche die größte Feldstärke aufweist, erfasst. Anschließend wird eine Verbindungs-Herstellungsprozedur von dem Kommunikationsendgerät zu wenigstens eine weitere Funkzelle, welche im Vergleich zur ersten Funkzelle eine glich starke oder schwächere Feldstärke aufweist, erfasst.

Analog zu den entsprechenden Ausführungen zum ersten Erfindungsaspekt, auf die vollinhaltlich Bezug genommen und verwiesen wird, werden netzwerkseitig bevorzugt nacheinander Verbindungs-Herstellungsprozeduren von einem Kommunikationsendgerät zu einer Anzahl von drei oder mehr, bevorzugt zu bis zu neun Funkzellen unterschiedlicher Feldstärke erfasst.

Erfindungsgemäß ist vorgesehen, dass das Kommunikationsendgerät mittels eines wie vorstehende beschriebenen Verfahrens gemäß dem ersten Erfindungsaspekt nacheinander eine Verbindung zu einer Anzahl von zwei oder mehr Funkzellen unterschiedlicher Feldstärke herstellt, und dass diese Verbindungs-Herstellungsprozeduren netzwerkseitig erfasst werden. In diesem Fall werden die Kommunikationsendgeräte, mit denen die Verbindungsherstellung zu den Funkzellen erfolgt, zum Bestandteil des Verfahrens, wobei die Kommunikationsendgeräte mit entsprechenden Gegenstellen im Kommunikationsnetz interagieren. Auf die entsprechenden Ausführungen zum ersten Erfindungsaspekt wird deshalb vollinhaltlich Bezug genommen und verwiesen.

In weiterer Ausgestaltung ist bevorzugt vorgesehen dass die Funkzellen-IDs der einzelnen Funkzellen mit geographischen Positionsdaten, insbesondere mit Längen- und Breitenabgaben verknüpft sind. Die geographische Position kann dabei aus der Funkzellen-ID bestimmt werden. Derartige Angaben liegen auf Seiten des Netzbetreibers in der Regel vor, insbesondere dann, wenn es sich bei dem Kommunikationsnetz um ein Mobilfunknetz handelt. Die geographische Position, die eine Funkzelle charakterisiert, kann dabei bevorzugt auf die Position der für die Funkzelle zuständigen Basisstation bezogen sein.

In weiterer Ausgestaltung können bevorzugt Werte über die Feldstärke einer Funkzelle zum Zeitpunkt der Verbindungsherstellung des Kommunikationsendgeräts mit dieser Funkzelle erfasst werden. Derartige Werte können im Wege einer Feldstärkemessung gemessen werden. Auch derartige Angaben liegen auf Seiten des Netzbetriebes in der Regel vor, insbesondere dann, wenn es sich bei dem Kommunikationsnetz um ein Mobilfunknetz handelt.

In bevorzugter Ausgestaltung können die Ortungsdaten netzwerkseitig in einer als zentrales APN-Register ausgebildeten zentralen Datenbank abgespeichert werden. Ein solches APN-Register wird im weiteren Verlauf der Beschreibung weiter unten näher erläutert.

Das wie vorstehend beschriebene Verfahren gemäß dem zweiten Erfindungsaspekt lässt sich ergänzend insbesondere auch wie folgt beschreiben.

Um die eigentliche Verortung realisieren zu können, kommt insbesondere der netzwerkseitige Zugriff des Netzbetreibers auf die zentrale Datenbank, beispielsweise das zentrale APN Register, zum Greifen. Handelt es sich bei dem Kommunikationsnetz um ein Mobilfunknetz, sind in der zentralen Datenbank die Kennungen der Kommunikationsendgeräte, beispielsweise die MSISNs einzelner Kommunikationsendgeräte mit den Funkzellen-IDs und einem Zeitstempel hinterlegt. Damit kann der Netzbetreiber ein aktiv in eine Zelle eingebuchtes Kommunikationsendgerät anwählen. Da jede Funkzellen-ID mit Längen- und Breitenangaben, auch Lat-Long Werte genannt, verknüpft ist und daher der geographische Ort der Funkelle genau bekannt ist, kann durch diese Information eine erste, noch sehr ungenaue Ortsinformation erhalten werden. Dieses ist jedoch in der Regel noch zu ungenau, da eine einzelne Funkzelle bis zu 35 km Radius abbilden kann. Durch die geänderte Firmware im Kommunikationsendgerät und dessen neuartiges Verbindungs-Herstellungsverhalten kann nun jedoch der nächste Funkzellen-ID Wert aus der zentralen Datenbank übernommen werden und damit eine zweite Ortsinformation zur ersten hinzugefügt werden. Aus den beiden Zellpunkten in Verbindung mit der Kenntnis der Sendeleistung der Basisstation, die netzwerkseitig ebenfalls als zentrale Information verfügbar ist, kann nun ein überlappender Bereich identifiziert werden. Wenn dieser Vorgang mehrfach wiederholt werden kann, da mehrere Funkzellen vorhanden sind, zu denen das Kommunikationsendgerät in kurzen Zeitabständen, beispielsweise in 5 Sekundenabständen eine Verbindung herstellt, kann der relevante Überschneidungsbereich immer weiter verkleinert werden, wodurch die Ortungsqualität immer weiter zunimmt und im Idealfall auf wenige Meter eingegrenzt werden kann.

Gemäß einem dritten Aspekt der Erfindung wird ein Verfahren zur Ortung eines mobilen Kommunikationsendgeräts in einem zellularen Kommunikationsnetz, wobei das Kommunikationsnetz aus einer Anzahl von Zellen besteht und wobei jede Zelle einer an einem definierten Standort befindlichen Basisstation zugeordnet ist, bereitgestellt, welches dadurch gekennzeichnet ist, dass die Ortung des Kommunikationsendgeräts netzwerkseitig mittels einer Ortungseinrichtung stattfindet, derart, dass die Ortungseinrichtung auf eine zentrale Datenbank des Kommunikationsnetzes zugreift, in der Ortungsdaten abgespeichert sind, die gemäß einem wie vorstehend beschriebenen Verfahren gemäß dem zweiten Erfindungsaspekt erzeugt worden sind, in Form von Kennungen von Kommunikationsendgeräten, die eine Verbindung zu Funkzellen des Kommunikationsnetzes herstellen, die mit Funkzellen-IDs der eingewählten Funkzelle sowie mit einem Zeitstempel zum Zeitpunkt der Verbindungsherstellung und/oder des Verbindungsabbruchs des Kommunikationsendgeräts zu einer Funkzelle verknüpft sind, dass für ein Kommunikationsendgerät mit einer vorgegebenen Kennung aus den Ortungsdaten Funkzellen-IDs ermittelt werden, bei denen die Zeitstempel in einem definierten zeitlichen Rahmen liegen, und dass aus den ermittelten Funkzellen-IDs die Position des Kommunikationsendgeräts bestimmt wird.

Im Unterschied zu den aus dem Stand der Technik bekannten Lösungen, in denen die Ortung eines Kommunikationsendgeräts im Kommunikationsendgerät stattfindet, findet die Ortung bei dem erfindungsgemäßen Verfahrens nunmehr netzwerkseitig statt. Dazu verfügt das Netzwerk über eine Ortungseinrichtung, bei der es sich beispielsweise um eine dem Netzwerk zugeordnete Rechnereinheit handeln kann. Diese Ortungseinrichtung greift zum Zwecke der Durchführung des Ortungsverfahrens auf eine zentrale Datenbank des Kommunikationsnetzes zu, in der bezüglich des zu ortenden Kommunikationsendgeräts Ortungsdaten abgespeichert sind.

Diese Ortungsdaten sind in der wie weiter oben zum zweiten Erfindungsaspekt dargestellte Weise ausgebildet, so dass diesbezüglich auf die entsprechenden Ausführungen weiter oben vollinhaltlich Bezug genommen und verwiesen wird. Insbesondere sind in der zentralen Datenbank Ortungsdaten abgespeichert in Form von Kennungen von Kommunikationsendgeräten, die eine Verbindung zu Funkzellen
des Kommunikationsnetzes herstellen, die mit Funkzellen-IDs der eingewählten Funkzellen sowie mit einem Zeitstempel zum Zeitpunkt der Verbindungsherstellung und/oder des Verbindungsabbruchs des Kommunikationsendgeräts zu einer Funkzelle verknüpft sind.

Um die Ortung eines bestimmten Kommunikationsendgeräts durchführen zu können, werden mittels der Ortungseinrichtung des Kommunikationsnetze für das Kommunikationsendgerät, welches eine bestimmte Kennung hat, mit der entsprechend vorgegebenen Kennung aus den Ortungsdaten Funkzellen-IDs ermittelt, bei denen die Zeitstempel in einem definierten zeitlichen Rahmen liegen. Wie weiter oben bereits beschrieben wurde, finden die aufeinanderfolgenden Verbindungs-Herstellungsprozeduren der Kommunikationsendgeräte zu den verschiedenen Funkzellen mit den gleichen und/oder unterschiedlichen Feldstärken mit definierten Zeitdauern für den Zustand der bestehenden Verbindung im Sekundenbereich statt, so dass die entsprechenden Verbindungsherstellungen zu den verschiedenen Funkzellen in kurzen Zeitabständen und damit zeitlich sehr dicht beieinander erfolgen. Für eine Anzahl von Verbindungsherstellungen eines Kommunikationsendgeräts zu verschiedene Funkzellen, die zeitlich dicht beieinander liegen, kann deshalb davon ausgegangen werden, dass diese für einen einzigen Ortungsvorgang herangezogen werden können. Um dies prüfen zu können, ist der jeweils mit den Daten verknüpfte Zeitstempel von Bedeutung.

Aus den ermittelten Funkzellen-IDs wird schließlich die Position des Kommunikationsendgeräts bestimmt. Wie dies im Einzelnen geschehen kann, wird im weiteren Verlauf näher erläutert. Grundsätzlich gilt, dass die geographische Position einer Funkzelle, beispielsweise die geographische Position der für die Funkzelle zuständigen Basisstation, aus den Funkzellen-IDs bestimmt werden kann. Entsprechende Angaben stehen den Netzbetreibern üblicherweise zur Verfügung

Bevorzugt können die Ortungsdaten, die in der zentralen Datenbank abgespeichert sind, gemäß einem wie vorstehende beschriebenen erfindungsgemäßen Verfahren gemäß dem ersten und dem zweiten Erfindungsaspekt erzeugt werden oder erzeugt worden sein, so dass zur Vermeidung von Wiederholungen auf die entsprechenden Ausführungen weiter oben an dieser Stelle vollinhaltlich Bezug genommen und verwiesen wird.

Bevorzugt greift die Ortungseinrichtung auf eine zentrale Datenbank des Kommunikationsnetzes zu, die als zentrales APN-Register ausgebildet ist. Ein solches APN-Register wird weiter unten in größerem Detail beschrieben.

Analog zu den definierten Zeitdauern, die ein Kommunikationsendgerät mit einer Funkzelle in Verbindung bleibt, wobei auf die entsprechenden Offenbarungen weiter oben vollinhaltlich Bezug genommen und verwiesen wird, werden für das Kommunikationsendgerät mit einer vorgegebenen Kennung bevorzugt Funkzellen-IDs ermittelt, bei denen die Zeitstempel in einem definierten zeitlichen Rahmen von kleiner 2 Minuten, bevorzugt in einem zeitlichen Rahmen zwischen 6 und 90 Sekunden, besonders bevorzugt zwischen 15 und 45 Sekunden liegen. Der zeitliche Rahmen bemisst sich dabei insbesondere nach der definierten Zeitdauer, für die ein Kommunikationsendgerät mit einer Funkzelle in Verbindung bleibt, sowie aus der Anzahl der Funkzellen, zu denen das Kommunikationsendgerät während eines Verfahrens zur Erzeugung von Ortungsdaten eine Verbindung aufbaut. In einem solchen Fall kann sich der zeitliche Rahmen beispielsweise durch eine Summierung der definierten Zeitdauern pro Funkzelle auf die gesamte Anzahl der Funkzellen, mit denen das Kommunikationsendgerät eine Verbindung aufbaut, ergeben.

Nachfolgend werden einige bevorzugte Ausführungsbeispiele beschrieben, wie aus den ermittelten Funkzellen-IDs schließlich eine Ortung des Kommunikationsendgeräts erreicht wird.

Bevorzugt ist vorgesehen, dass für das Kommunikationsendgerät mit einer vorgegebenen Kennung aus den Ortungsdaten zunächst eine Funkzellen-ID einer ersten Funkzelle, insbesondere der Funkzelle mit der größten Feldstärke, ermittelt wird und dass daraus erste Ortsinformationen bezüglich des Kommunikationsendgeräts erzeugt werden, dass anschließend die Funkzellen-ID wenigstens einer weiteren Funkzelle, insbesondere einer Funkzelle mit einer im Vergleich zur ersten Funkzelle gleichen oder geringeren Feldstärke, ermittelt wird und dass daraus zweite Ortsinformationen bezüglich des Kommunikationsendgeräts erzeugt werden, und dass die zweiten Ortsinformationen zu den ersten Ortsinformationen hinzugefügt werden.

In weiterer Ausgestaltung ist bevorzugt vorgesehen, dass die Ortungseinrichtung auf eine zentrale Datenbank des Kommunikationsnetzes zugreift, in der Ortungsdaten abgelegt sind, die erzeugt werden, indem ein Kommunikationsendgerät eine Verbindung zu einer Anzahl von zwei oder mehr Funkzellen gleicher und/oder unterschiedlicher Feldstärke herstellt, dass das Kommunikationsendgerät für eine definierte Zeitdauer die Verbindung zu der entsprechenden Funkzelle beibehält, dass nach Ablauf der definierten Zeitdauer das Kommunikationsendgerät die Verbindung zu entsprechenden Funkzelle wieder abbricht und eine Verbindung zur nächsten Funkzelle herstellt, dass nach der Verbindungsherstellung zu einer Funkzelle, insbesondere netzwerkseitig, eine Kennung des die Verbindung herstellenden Kommunikationsendgeräts mit einer Funkzellen-ID der Funkzelle, zu der das Kommunikationsendgerät die Verbindung herstellt, verknüpft wird, dass zum Zeitpunkt der Verbindungsherstellung I und/oder des Verbindungsabbruchs I des Kommunikationsendgeräts zur Funkzelle ein Zeitstempel erzeugt wird, der mit der Kennung des Kommunikationsendgeräts und der Funkzellen-ID zur Ortungsdaten verknüpft wird, dass aus den Ortungsdaten einer ersten Funkzelle erste Ortsinformationen bezüglich des Kommunikationsendgeräts erzeugt werden, und dass aus den Ortungsdaten wenigstens einer weiteren Funkzelle wenigstens eine weitere Ortsinformation bezüglich des Kommunikationsendgeräts erzeugt wird, die der ersten Ortsinformation hinzugefügt wird.

Aus den zusammengefügten Ortsinformationen bezüglich des Kommunikationsendgeräts wird in einer bevorzugten Ausführungsform ein überlappender Bereich identifiziert beziehungsweise ermittelt, wobei sich die Position des Kommunikationsendgeräts im Überlappungsbereich befindet.

Bevorzugt ist vorgesehen, dass die Ortungsfrequenz eines Kommunikationsendgeräts in der Größenordnung von einer oder mehreren Stunden, oder in der Größenordnung von einem oder mehreren Tagen, liegt. Bevorzugt kann die Ortungsfrequenz in einer Größenordnung von 24 Stunden liegen. Das bedeutet, dass eine Ortung des Kommunikationsendgeräts alle 24 Stunden vorgenommen wird. Dazu wird das Kommunikationsendgerät, so wie weiter oben beschrieben, alle 24 Stunden aus dem Bereitschaftsmodus in den Betriebsmodus gebracht. Im Betriebsmodus führt das Kommunikationsendgerät dann die Verbindungs-Herstellungsprozeduren in die verschiedenen Funkzellen mit den gleichen und/oder unterschiedlichen Feldstärken durch. Aus den auf Basis dieser Verbindungs-Herstellungsprozesse entstehenden Ortungsdaten werden anschließend die Ortsinformationen ermittelt. Ist das Verfahren abgeschlossen, wird das Kommunikationsendgerät zurück in den Bereitschaftsmodus versetzt, in dem es bis zu seiner nächsten Aktivierung nach weiteren 24 Stunden verbleibt.

Das erfindungsgemäße Ortungsverfahren greift auf eine zentrale Datenbank, beispielsweise das globale APN-Register zu, um eine Ortung des Kommunikationsendgeräts zu ermöglichen, wobei das Kommunikationsendgerät in einer Weise ausgebildet ist, dass es, vorzugsweise während es sich nicht oder nur sehr langsam bewegt, in der Lage ist, nacheinander eine Verbindung zu den an seinem Standort zur Verfügung stehen Funkzellen herzustellen. Dabei werden die Kennungen der Kommunikationsendgeräte mit den Funkzellen-IDs gepairt, welche aus der zentralen Datenbank entnommen werden können. Die Funkzellen-IDs werden mit geographischen Längen- und Breitenangaben verknüpft. Da sich das Kommunikationsendgerät eine Verbindung zu mehrere Funkzellen herstellt, kann dadurch eine genaue Ortung des Kommunikationsendgeräts erfolgen.

Dabei ist von besonderem Vorteil, dass seitens des Kommunikationsendgeräts keine kostenpflichtige Daten- oder Sprachverbindung zu dem Kommunikationsnetz aufgebaut wird. Zudem kann das Kommunikationsendgerät mit einem minimalen Energieverbrauch geortet werden. Damit kann das Kommunikationsendgerät eine sehr hohe Lebensdauer beziehungsweise Laufzeit erreichen.

Im weiteren Verlauf wird nun ein Kommunikationsendgerät beschrieben, mit dem wie vorstehend beschriebene Ortungsdaten erzeugt werden können, und welches in der wie vorstehend beschriebenen Weise geortet werden kann.

Gemäß einem vierten Aspekt der vorliegenden Erfindung wird ein Kommunikationsendgerät für die Kommunikation in einem zellularen Kommunikationsnetz mit einer Anzahl von Funkzellen, bereitgestellt aufweisend eine Einrichtung zur Erzeugung elektrischer Energie, ein Gehäuse sowie ein Kommunikationsmodul zur Herstellung einer Verbindung des Kommunikationsendgeräts mit den Funkzellen des Kommunikationsnetzes. Das Kommunikationsendgerät ist dadurch gekennzeichnet, dass das Kommunikationsendgerät eine Verbindungs-Herstellungseinrichtung aufweist, die ausgebildet ist, dass das Kommunikationsendgerät nacheinander mit einer Anzahl von zwei oder mehr Funkzellen gleicher und/oder unterschiedlicher Feldstärke eine Verbindung herstellt, dass das Kommunikationsendgerät für eine definierte Zeitdauer die Verbindung zu der entsprechenden Funkzelle beibehält, und dass nach Ablauf der definierten Zeitdauer das Kommunikationsendgerät die Verbindung zu der entsprechenden Funkzelle abbricht und die Verbindung zur nächsten Funkzelle herstellt.

Das Kommunikationsendgerät ist für die Kommunikation in einem zellularen Kommunikationsnetz mit einer Anzahl von Funkzellen ausgebildet. Grundsätzlich ist die vorliegende Erfindung nicht auf bestimmte Typen von Kommunikationsendgeräten beschränkt. Handelt es sich bei dem Kommunikationsnetz um ein Mobilfunknetz, kann das Kommunikationsendgerät beispielsweise als Mobiltelefon ausgebildet sein. In diesem Fall kann das Kommunikationsendgerät beispielsweise als sehr einfaches Mobiltelefon ausgebildet sein, bei dem zudem noch einige, ansonsten übliche Komponenten entfernt werden. Damit kann das Kommunikationsendgerät besonders kostengünstig hergestellt werden. Beispielsweise könnte der Standard SIMslot durch eine embedded global SIM Karte ersetzt werden. Das Display, Lautsprecher, Tastatur, Rückleuchte sowie der interne Speicher könnten entfernt werden.

Das Kommunikationsendgerät weist eine Einrichtung zur Erzeugung elektrischer Energie auf. Dabei ist die Erfindung nicht auf bestimmte Ausführungsformen derartiger Einrichtungen beschränkt. Um das Kommunikationsendgerät möglichst unabhängig benutzen zu können, ist bevorzugt vorgesehen, dass die Einrichtung zur Erzeugung elektrischer Energie wenigstens ein Solarmodul aufweist. Zusätzlich oder alternativ kann vorgesehen sein, dass die Einrichtung zur Erzeugung elektrischer Energie eine Einrichtung zur Speicherung elektrischer Energie, insbesondere einen Akku, aufweist.

Das Kommunikationsendgerät weist zudem ein Gehäuse auf. Dieses Gehäuse soll möglichst robust sein und negative Einflüsse von außen fernhalten. Bevorzugt handelt es sich um ein vollvergossenes Gehäuse, welches hermetisch dicht ist und welches insbesondere wasserdicht und staubdicht ist.

Das Kommunikationsendgerät verfügt zudem über ein Kommunikationsmodul zur Herstellung einer Verbindung zu den Funkzellen des Kommunikationsnetzes. Je nach Kommunikationsnetztyp kann ein solches Kommunikationsmodul unterschiedlich ausgebildet sein. Handelt es sich bei dem Kommunikationsnetz um ein Mobilfunknetz, kann es sich bei dem Kommunikationsmodul beispielsweise um ein GSM-Modul oder dergleichen handeln.

Nachfolgend wird ein bevorzugtes Ausführungsbeispiel für ein solches Kommunikationsendgerät beschrieben. Hierbei handelt es sich um ein klassisches GSM/GPRS basierendes System. Bei diesem wird vor allem durch die Verwendung eines Solarmoduls in Form einer multikristallinen Solarzelle in Verbindung mit einem internen Li/Pol Akku eine überdurchschnittliche Lebensdauer erzielt und damit der Handling Aufwand minimiert. Die Akku-Batterie ist in der Haupteinheit des Geräts untergebracht. Weiterhin sind in der Haupteinheit die Ladelektronik, die das Aufladen des Akkus durch das Solar-Modul steuert, und das GSM-Modul, bestehend aus einem 3G-Modem und Antenne zur Übertragung von Nachrichten, untergebracht. Weiterhin vorgesehen ist ein vollvergossenes Gehäuse

Erfindungsgemäß weist das Kommunikationsendgerät eine Verbindungs-Herstellungseinrichtung auf, die ausgebildet ist, dass das Kommunikationsendgerät nacheinander eine Verbindung zu einer Anzahl von zwei oder mehr Funkzellen gleicher und/oder unterschiedlicher Feldstärke herstellt, dass das Kommunikationsendgerät für eine definierte Zeitdauer die Verbindung zu der entsprechenden Funkzelle beibehält, und dass nach Ablauf der definierten Zeitdauer das Kommunikationsendgerät die Verbindung zu der entsprechenden Funkzelle wieder abbricht und die Verbindung zu der nächste Funkzelle herstellt. Diese Verbindungs-Herstellungseinrichtung ist insbesondere ausgebildet, um das erfindungsgemäße Verfahren gemäß dem ersten Erfindungsaspekt durchzuführen, so dass hinsichtlich der Offenbarung der Einwahleinrichtung auch auf die entsprechenden Ausführungen weiter oben vollinhaltlich Bezug genommen und verwiesen wird. Beispielsweise kann es sich bei einer solchen Verbindungs-Herstellungseinrichtung um ein elektrisches Bauteil oder eine elektrische Schaltung handeln. Bevorzugt ist die Verbindungs-Herstellungseinrichtung aber eine Softwarekomponente, die Bestandteil der Firmware des Kommunikationsendgeräts ist.

In weiterer Ausgestaltung weist das Kommunikationsendgerät bevorzugt eine Zeitgebereinheit auf. Beispielsweise kann es sich bei einer solchen Zeitgebereinheit um ein elektrisches Bauteil oder eine elektrische Schaltung handeln. Bevorzugt ist die Zeitgebereinheit aber eine Softwarekomponente, die Bestandteil der Firmware des Kommunikationsendgeräts ist. In der Zeitgebereinheit ist ein Zeitintervall festgelegt, nach dessen Ablauf das Kommunikationsendgerät jeweils aus einem Bereitschaftsmodus in einen Betriebsmodus wechselt. Weiterhin weist die Zeitgebereinheit eine Triggereinrichtung zum Erzeugen eines Triggersignals am Ende des Zeitintervalls auf, bei dem das Kommunikationsendgerät von dem Bereitschaftsmodus in den Betriebsmodus wechselt. Diese Zeitgebereinheit ist insbesondere ausgebildet, um bei dem erfindungsgemäßen Verfahren gemäß dem ersten Erfindungsaspekt eingesetzt zu werden, so dass hinsichtlich der Offenbarung der Zeitgebereinheit auch auf die entsprechenden Ausführungen weiter oben vollinhaltlich Bezug genommen und verwiesen wird.

In weiterer Ausgestaltung weist das Kommunikationsendgerät bevorzugt eine Schalteinrichtung zum Umschalten des Kommunikationsendgeräts vom Betriebsmodus zurück in den Bereitschaftsmodus nach Auswahl des Kommunikationsendgeräts aus der letzten Funkzelle auf. Beispielsweise kann es sich bei einer solchen Schalteinrichtung um ein elektrisches Bauteil oder eine elektrische Schaltung oder eine Softwarekomponente handeln. Diese Schalteinrichtung ist insbesondere ausgebildet, um bei dem erfindungsgemäßen Verfahren gemäß dem ersten Erfindungsaspekt eingesetzt zu werden, so dass hinsichtlich der Offenbarung der Schalteinrichtung auch auf die entsprechenden Ausführungen weiter oben vollinhaltlich Bezug genommen und verwiesen wird.

Bevorzugt weist das Kommunikationsendgerät Mittel zur Durchführung des erfindungsgemäßen Verfahrens gemäß dem ersten Erfindungsaspekt auf, so dass diesbezüglich auf die entsprechenden Ausführungen weiter oben vollinhaltlich Bezug genommen und verwiesen wird.

Bevorzugt weist das Kommunikationsendgerät eine Befestigungseinrichtung zur Befestigung des Kommunikationsendgeräts an einem externen Bauteil auf. Dabei ist die Erfindung nicht auf bestimmte Typen von Befestigungseinrichtungen beschränkt. Beispielswiese kann es sich hierbei um eine Montageschraube, etwa eine Blechschneideschraube und Halterungsring handeln. Über die Befestigungseinrichtung kann das Kommunikationsendgerät besonders einfach an einem externen Bauteil, beispielsweise einem beweglichen Objekt, beispielsweise einem Container, befestigt werden. Die Befestigungseinrichtung kann je nach Anwendungsfall eine lösbare oder unlösbare Befestigung des Kommunikationsendgeräts an dem externen Bauteil ermöglichen. Im Falle einer Containerortung bietet es sich an, die Befestigung unlösbar vorzunehmen, um ein unbefugtes Abnehmen des Kommunikationsendgeräts vom Container zu verhindern.

In weiterer Ausgestaltung weist das Kommunikationsendgerät bevorzugt wenigstens eine Photozelle auf. Im Falle eines Einsatzes des Kommunikationsendgeräts an einem Container könnte damit ein Türöffnungssensor realisiert werden, welcher bei Überlappender Montage an der Stirnseite des Containers den Öffnungsstatus der Tür mit überwacht und im Alarmfall überträgt.

Das erfindungsgemäße Kommunikationsendgerät weist eine Reihe von Vorteilen auf. Zunächst hat es eine sehr lange Lebensdauer, beispielsweise aufgrund der Solarzelle und des geringen Energieverbrauchs durch das Ortungskonzept. Weiterhin verfügt es über eine sehr vorteilhafte Ortungsgenauigkeit und Ortungsfrequenz. So ist beispielsweise eine Ortung alle x Stunden mit einer Genauigkeit von bis zu wenigen Metern auch ohne Sichtverbindung zu einem Satelliten möglich. Das Kommunikationsendgerät hat eine sehr geringe Baugröße, ist einfach und damit kostengünstig konstruiert und hat eine Einfachheit der Montage. Beispielsweise kann eine Montagezeit von wenigen Sekunden realisiert werden durch eine integrierte, selbstschneidende und selbstsichernde Schraube in Verbindung mit einem einfachen und kompakten, wasserdichten Gehäuse. Zudem fallen für die Ortung keine Kommunikationskosten an.

Die erfindungsgemäße Ortungsmethode selbst ist ebenfalls bisher in dieser Form nicht bekannt. Wichtig ist das Verständnis, dass es sich nicht um die klassische Triangulation /Trilateration handelt, welche bereits auf Kommunikationsendgeräten durchgeführt werden kann und das Ergebnis der Ortung dann an einen Server überträgt. Die erfindungsgemäße Lösung findet nicht auf einem Endgerät statt, sondern zentral auf einem System des Netzbetreibers. Alternativen existieren dazu zwar bereits, beispielsweise die stille Ortung via SMS, oder Ortung durch Anruf des Endgerätes auf einem dedizierten Server, der aus der Art der angerufenen Nummer die Ortsdaten auslesen kann. Nachteile beider Verfahren liegen jedoch insbesondere in der Gesamtkostenseite. Entweder entstehen Kosten durch die Nutzung von Kommunikationskanälen, sei es GSM oder GPRS, oder die Ortungsinformation wird durch das Endgerät selbst erfasst, etwa durch Erfassung der vorhandenen Cell-IDs oder durch Nutzung eines GPS Chips, und an eine zentrale Stelle ermittelt, wodurch höhere Hardwarekosten bei jedem Endgerät entstehen und der Energieverbrauch der Endgeräte steigt, wodurch wiederum die Hardwarekosten weiter steigen. Einen Ansatz, der rein zentral ein Gerät dadurch verortet, dass es sich bewusst in verschiedene Zellen einwählt, während insbesondere keine Ortsveränderung stattfindet, aber keine Daten dabei überträgt ist bisher nicht bekannt.

Bei der vorliegenden Erfindung kommt bevorzugt eine zentrale Datenbank zum Einsatz, bei der es sich insbesondere um ein APN-Register handelt. Das APN (Access Point Name) Register, bei dem es sich beispielsweise um das HLR - Home Location Register in Verbindung mit VLR = Visitor Location Register handeln kann selbst, beinhaltet bevorzugt nicht nur die Informationen von eigenen Stationen/Funkmasten des jeweiligen Netzbetreibers, da ja hierüber eine Verbindung hergestellt werden muss. Bei Verbindung mit einer Funkzelle werden im APN die IMSI (bestehend aus MNC, die MCC sowie die MSISDN des Telefons selbst) hinterlegt um eine eineindeutige Identifizierung des mobilen Endgerätes auf Einzelgerätebene zu erlauben. Zu den Abkürzungen:
MNC steht für den "mobile network code" und
MCC steht für den "mobile country code"
Während der MCC eine erste Zuordnung auf den Kontinent und das individuelle Land erlaubt, gibt der MNC gibt das verwendete Netzwerk an.

MSISDN steht für die Mobile Station Integrated Services Digital Network Number und stellt die ID des Endgerätes beziehungsweise der SIM Karte dar.

Nachdem das Telefon über die IMSI eineindeutig innerhalb des globalen Netzwerkes identifiziert werden kann, wird in der VLR/HLR Datenbank nun neben der IMSI (MNC, MCC und MSISDN) nun auch der Zugriffsort auf das Endgerät abgelegt. Hierbei werden folgende Daten neben den oben bereits erwähnten abgespeichert:
1. Der MSRN (Mobile Station Roaming Number). Diese wiederum besteht aus:
   Visitor Country Code (VCC)
   Visitor National Destination Code (VNDC)
   Visitor Mobile Switching Center (VMSC)
   Visitor Subscriber Number (VSN).
2. Der Location Area Identity (LAI). Diese wiederum besteht aus:
   Mobile Country Code (MCC) der Basisstation und definiert das Land in dem sich das Endgerät befindet
   Mobile Network Code (MNC) der Basisstation und definiert das Netz, in welches sich das Endgerät zuletzt eingewählt hat.

Location Area Code (LAC) der Basisstation. Dieser besteht in der Regel aus einer Gruppe an Funkzellen (BTS) sowie der individuellen Cell ID, welche die Funkzellen innerhalb eines BTS unterscheidbar macht sowie in manchen Fällen (je nach Provider)

Die Antennenrichtung (Hierbei wird über die Ziffern '1', '2' und '3' bei den üblicherweise 120° umfassenden BTS-Sektorantennen die Kennung der jeweiligen Sektorantenne verwendet um eine genauere Verortung innerhalb der Zelle zu ermöglichen)

Hiermit ist das mobile Endgerät eindeutig einer Zelle zuzuordnen. Die Umrechnung in Adressdaten, beziehungsweise Lat./Long. Koordinaten erfolgt über Abgleich der Cell-ID (Idealerweise mit Zusatzinformationen wie der verwendeten Antenne, der Sendestärke oder der TA Werte) über Netzwerk interne Datenbanken.

Bevorzugt werden die einzelnen Verfahren gemäß der verschiedenen Erfindungsaspekte oder das erfindungsgemäße Kommunikationsendgerät für die Ortung von beweglichen Objekten, insbesondere von Containern, verwendet.

Die Erfindung wird nun anhand eines Ausführungsbeispiels unter Bezugnahme auf die beiliegenden Zeichnungen näher beschreiben. Es zeigen
- Figur 1: ein Ausführungsbeispiel eines erfindungsgemäßen Kommunikationsendgeräts; und
- Figuren 2 bis 5: den Ablauf eines erfindungsgemäßen Verfahrens zur Ortung des Kommunikationsendgeräts.

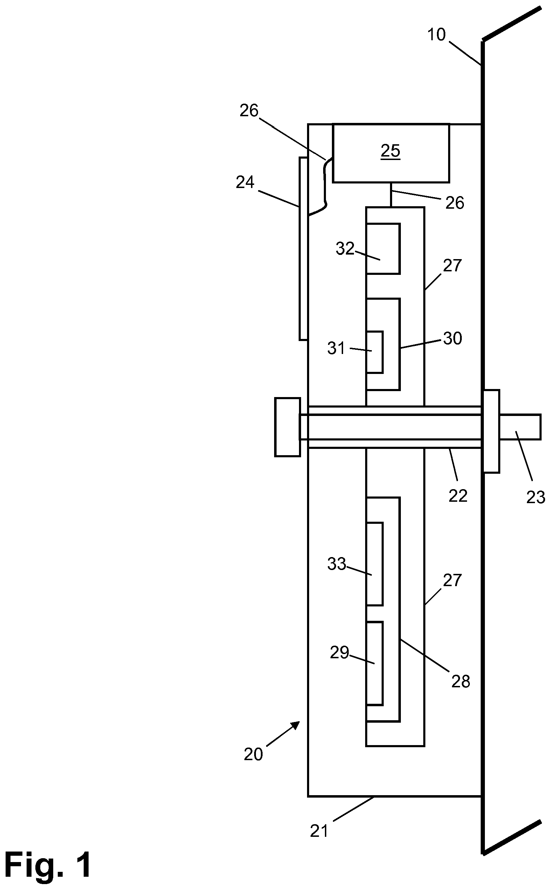

In der Figur 1 ist ein Kommunikationsendgerät 20 dargestellt, welches im Zusammenhang mit der Ortung von Containern 10 eingesetzt wird.

Das Kommunikationsendgerät 20 liegt in Form eines einfachen Mobiltelefons vor und ist einem zellularen Kommunikationsnetz in Form eines Mobilfunknetzes zugeordnet.

Das Kommunikationsendgerät 20 weist zunächst ein vollvergossenes, wasserdichtes Gehäuse 21 auf, indem sich der Großteil der Bauelemente des Kommunikationsendgeräts befindet. Über eine im Gehäuse vorgesehene Hülse 22 kann eine Befestigungseinrichtung in Form einer Montageschraube 23 hindurch gesteckt werden. Über die Montageschraube 23 kann das Kommunikationsendgerät 20 unlösbar an einer Wand des Containers 10 befestigt werden.

Zur Erzeugung der benötigten elektrischen Energie ist außerhalb des Gehäuses 21 wenigstens ein Solarmodul 24 vorgesehen, welches über ein Verbindungskabel 26 mit einer Einrichtung zum Speichern von Energie 25, beispielsweise einem Akku, verbunden ist. Die von dem Solarmodul 24 erzeugte Energie kann auf diese Weise in der Einrichtung zum Speichern von Energie zwischengespeichert werden.

Die einzelnen Bauteile des Kommunikationsendgeräts 20 befinden sich auf einer Platine 27, die über ein Verbindungskabel 26 mit der Einrichtung 25 zum Speichern von Energie verbunden ist.

In Figur 1 sind die einzelnen Komponenten zu Verdeutlichungszwecken schematisch auf der Platine 27 gezeigt. Hierbei kann es sich um elektrische Bauteile oder elektrische Schaltungen handeln. Bevorzugt können einzelne Komponenten in Form von Softwarekomponenten aber auch Bestandteil der Firmware des Kommunikationsendgeräts 20 sein.

Das Kommunikationsendgerät 20 weist zunächst ein Kommunikationsmodul 28 auf, über die das Kommunikationsendgerät 20 mit und im Kommunikationsnetz kommunizieren kann. Das Kommunikationsmodul 28 verfügt über eine Verbindungs-Herstellungseinrichtung 29, mit der das Kommunikationsendgerät 20 eine Verbindung zu den Funkzellen des Kommunikationsnetzes herstellen kann. Die Verbindungs-Herstellungseinrichtung 29 sorgt auch dafür, dass das Kommunikationsendgerät 20 für eine definierte Zeitdauer, beispielsweise für fünf Sekunden, nach der Verbindungsherstellung zu der entsprechenden Funkzelle diese Verbindung beibehält, und dass das Kommunikationsendgerät 20 nach Ablauf der definierten Zeitdauer die Verbindung zu der entsprechenden Funkzelle wieder abbricht, das heißt von dieser getrennt, wird.

Weiterhin weist das Kommunikationsendgerät 20 eine Zeitgebereinheit 30 auf, in der ein festgelegtes Zeitintervall vorgegeben ist. Zudem verfügt die Zeitgebereineinheit 30 über eine Triggereinrichtung 32 zum Erzeugen eines Triggersignals. Das Triggersignal kann ein Signal zum Umschalten des Betriebsmodus des Kommunikationsendgeräts 20 sein. Bevorzugt ist vorgesehen, dass sich das Kommunikationsendgerät 20 zunächst oder grundsätzlich in einem Bereitschaftsmodus befindet. Nach Ablauf eines Zeitintervalls, das heißt am Ende des Zeitintervalls, wird ein Triggersignal erzeugt, aufgrund dessen das Kommunikationsendgerät 20 aus dem Bereitschaftsmodus in den Betriebsmodus wechselt. Im Betriebsmodus kann das Kommunikationsendgerät 20 die Verbindungs-Herstellungsprozeduren zu den Funkzellen vornehmen. Ist dies beendet, wird das Kommunikationsendgerät 20 aus dem Betriebsmodus zurück in den Bereitschaftsmodus geschaltet. Dies erfolgt über eine entsprechende Schalteinrichtung 32. Zu Authentifizierungszwecken verfügt das Kommunikationsendgerät 20 schließlich über eine Embeddeed SIM-Karte 33.

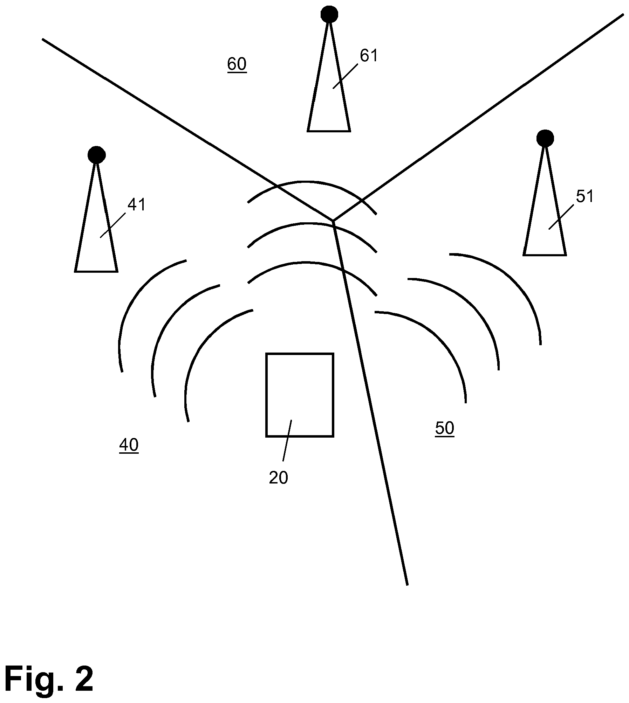

Der Ablauf des erfindungsgemäßen Ortungsverfahrens wird nun anhand der Figuren 2 bis 5 beschrieben.

Dazu ist vorgesehen, dass das Kommunikationsendgerät 20 nacheinander eine Verbindung zu einer Anzahl von Funkzellen mit gleicher und/oder unterschiedlicher Feldstärke herstellt. In Figur 2 sind zu Verdeutlichungszwecken drei Funkzellen 40, 50, 60 gezeigt. Jeder Funkzelle 40, 50, 60 ist eine Basisstation 41, 51, 61 zugeordnet. Am Standort des Kommunikationsendgeräts 20 haben die Funkzellen 40, 50, 60 in Bezug auf das Kommunikationsendgerät 20 eine gleiche oder unterschiedliche Feldstärke.

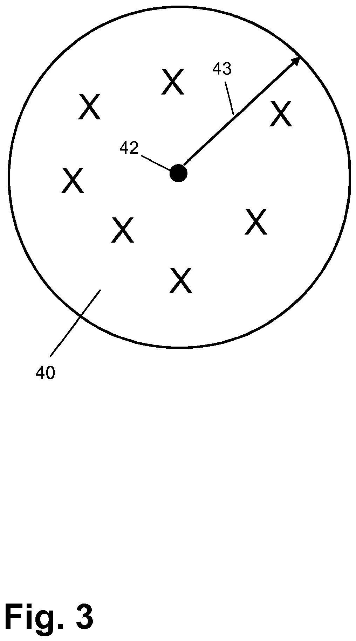

Nachdem das Kommunikationsendgerät 20 nach Ablauf des Zeitintervalls, beispielsweise nach 24 Stunden, durch das Triggersignal aus dem Bereitschaftsmodus in den Betriebsmodus umgeschaltet worden ist, stellt das Kommunikationsendgerät 20 nacheinander eine Verbindung zu den einzelnen Funkzellen 40, 50, 60 her, wobei es zunächst eine Verbindung zu der stärksten Funkzelle 40 herstellt. Die Funkzelle 40 hat eine bestimmte Funkzellen-ID, die netzwerkseitig in einer zentralen Datenbank abgelegt ist, die von einer netzwerkseitigen Ortungseinrichtung genutzt werden kann. Die Information, dass das Kommunikationsendgerät 20 eine Verbindung zu der Funkzelle 40 hergestellt hat, kann unter Zuhilfenahme der zentralen Datenbank in geographische Längen- und Breitenangaben übersetzt werden. Unter Zuhilfenahme der zentralen Datenbank kann ebenfalls die Sende-Feldstärke der Funkzelle 40 ermittelt werden. Von einem Zellpunkt 42 der Funkzelle 40 aus gesehen, bei dem es sich beispielsweise um den Standort der Basisstation 41 handelt, sowie aufgrund der Positionsdaten 43 in Form von Längen- und Breitenangaben, kann die Funkzelle 40 geographisch bestimmt werden, wie dies für die Zelle 40 in Figur 3 dargestellt ist. Damit ergeben sich für das Kommunikationsendgerät 20 in der Funkzelle 40 eine ganze Reihe möglicher Positionen, von denen einige zu Verdeutlichungszwecken in Figur 3 mit "X" gekennzeichnet sind.

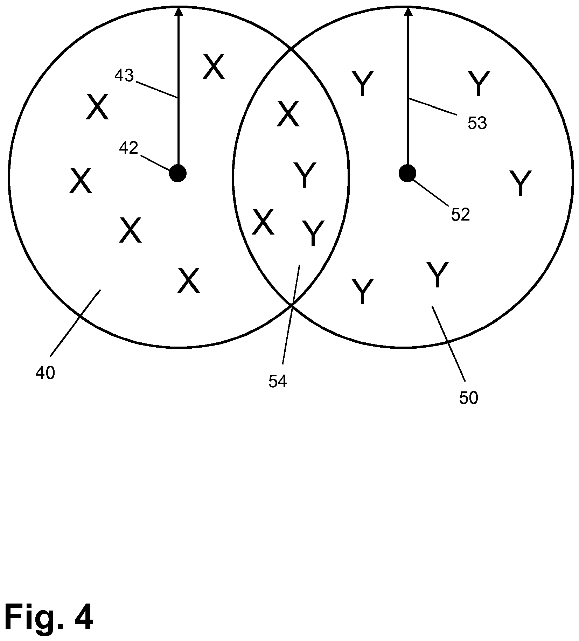

Fünf Sekunden nach Verbindungsherstellung zu der Funkzelle 40 wird das Kommunikationsendgerät 20 von der Funkzelle 40 getrennt und stellt in gleicher Weise eine Verbindung zur nächsten Funkzelle 50 mit einer niedrigeren Feldstärke her, wie dies in Figur 4 dargestellt ist. Wiederum werden die Informationen aus der zentralen Datenbank in die netwerkseitige Ortungseinrichtung übertragen. Die Information, dass das Kommunikationsendgerät 20 eine Verbindung zu der Funkzelle 50 hergestellt hat, kann unter Zuhilfenahme der zentralen Datenbank wiederum in geographische Längen- und Breitenangaben übersetzt werden. Unter Zuhilfenahme der zentralen Datenbank kann ebenfalls die Sende-Feldstärke der Funkzelle 50 ermittelt werden. Von einem Zellpunkt 52 der Funkzelle 50 aus gesehen, bei dem es sich beispielsweise um den Standort der Basisstation 51 handelt, sowie aufgrund der Positionsdaten 53 in Form von Längen- und Breitenangaben kann auch die Funkzelle 50 geographisch bestimmt werden. Damit ergeben sich für das Kommunikationsendgerät 20 auch in der Funkzelle 50 eine ganze Reihe möglicher Positionen, von denen einige zu Verdeutlichungszwecken in Figur 4 mit "Y" gekennzeichnet sind.

Da sich das Kommunikationsendgerät sowohl mit der Funkzelle 40 als auch mit der Funkzelle 50 verbunden hat, kann sich dessen mögliche Position folglich nur in dem Überlappungsbereich 54 der beiden Zellen 40, 50 befinden.

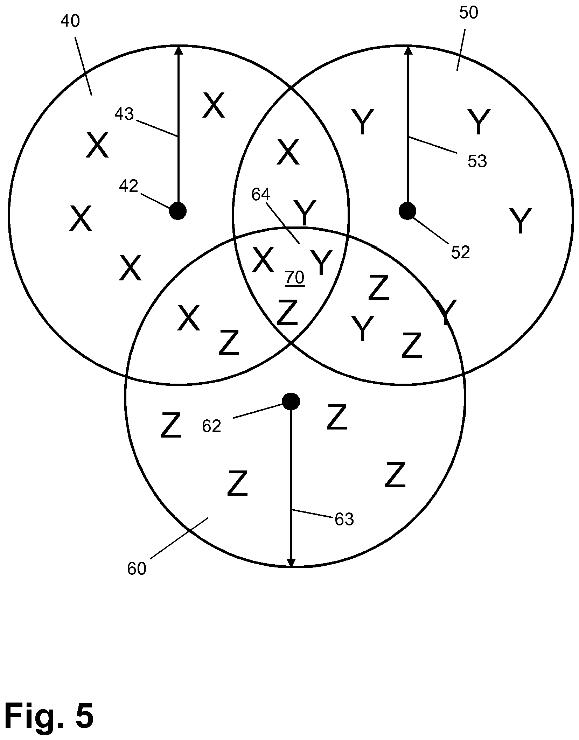

In Figur 5 ist dargestellt, dass dieser Prozess noch einmal wiederholt wird. Fünf Sekunden nach Herstellung der Verbindung zu der Funkzelle 50 wird das Kommunikationsendgerät 20 von der Funkzelle 50 getrennt und stellt in gleicher Weise eine Verbindung zur nächsten Funkzelle 60 mit einer noch niedrigeren Feldstärke her. Wiederum werden die Informationen aus der zentralen Datenbank in die netwerkseitige Ortungseinrichtung übertragen. Die Information, dass sich das Kommunikationsendgerät 20 in die Funkzelle 60 eingewählt hat, kann unter Zuhilfenahme der zentralen Datenbank wiederum in geographische Längen- und Breitenangaben übersetzt werden. Unter Zuhilfenahme der zentralen Datenbank kann ebenfalls die Sende-Feldstärke der Funkzelle 60 ermittelt werden. Von einem Zellpunkt 62 der Funkzelle 60 aus gesehen, bei dem es sich beispielsweise um den Standort der Basisstation 61 handelt, sowie aufgrund der Positionsdaten 63 in Form von Längen- und Breitenangaben kann auch die Funkzelle 60 geographisch bestimmt werden. Damit ergeben sich für das Kommunikationsendgerät 20 schließlich auch in der Funkzelle 60 eine ganze Reihe möglicher Positionen, von denen einige zu Verdeutlichungszwecken in Figur 5 mit "Z" gekennzeichnet sind.

Da sich das Kommunikationsendgerät sowohl mit der Funkzelle 40 als auch mit der Funkzelle 50 als auch mit der Funkzelle 60 verbunden hat, kann sich dessen mögliche Position folglich nur in dem Überlappungsbereich 64 der drei Zellen 40, 50, 60 befinden. Damit kann die tatsächliche Position 70 des Kommunikationsendgeräts 20 auf diese Weise sehr genau bestimmt werden.

Als geeignete Annäherung kann jeweils angenommen werden, dass die Position in der Mitte des jeweiligen Funkzellen 40, 50, 60 und in der Mitte der Überlappungsbereiche 54, 64 liegt. Auf diese Weise kann eine kostenneutrale, zentralisierte Ortung des Kommunikationsendgeräts 20 erfolgen, da kostenpflichtige Datenübertragungen während des Verfahrens nicht stattfinden.

### Bezugszeichenliste

- 10: Container

- 20: Kommunikationsendgerät
- 21: Gehäuse
- 22: Hülse für Montageschraube
- 23: Befestigungseinrichtung (Montageschraube)
- 24: Solarmodul
- 25: Einrichtung zum Speichern von Energie (Akku)
- 26: Verbindungskabel
- 27: Platine
- 28: Kommunikationsmodul
- 29: Verbindungs-Herstellungseinrichtung
- 30: Zeitgebereinheit
- 31: Triggereinrichtung zum Erzeugen eines Triggersignals
- 32: Schalteinrichtung zum Umschalten vom Betriebsmodus in den Bereitschaftsmodus
- 33: Embedded SIM-Karte

- 40: Funkzelle
- 41: Basisstation
- 42: Zellpunkt
- 43: Positionsdaten (Längen, Breitenabgabe)

- 50: Funkzelle
- 51: Basisstation
- 52: Zellpunkt
- 53: Positionsdaten (Längen, Breitenabgabe)
- 54: Überlappungsbereich zwischen den Zellen 40 und 50
- 60: Funkzelle
- 61: Basisstation
- 62: Zellpunkt
- 63: Positionsdaten (Längen, Breitenabgabe)
- 64: Überlappungsbereich zwischen den Zellen, 40, 50 und 60

- 70: Geortete Position des Kommunikationsendgeräts

- X: Mögliche Positionen des Kommunikationsendgeräts in Zelle 40
- Y: Mögliche Positionen des Kommunikationsendgeräts in Zelle 50
- Z: Mögliche Positionen des Kommunikationsendgeräts in Zelle 60

## Patentansprüche

1. Verfahren zur Erzeugung von Ortungsdaten für die Ortung eines mobilen Kommunikationsendgeräts (20) in einem zellularen Kommunikationsnetz, wobei das Kommunikationsnetz aus einer Anzahl von Funkzellen (40, 50, 60) besteht, das Kommunikationsendgerät (20) nacheinander eine Verbindung zu einer Anzahl von zwei oder mehr Funkzellen (40, 50, 60) mit gleicher und/oder unterschiedlicher Feldstärke herstellt, **dadurch gekennzeichnet**
**dass** das Kommunikationsendgerät (20) für eine definierte Zeitdauer die Verbindung zu der jeweiligen Funkzelle (40, 50, 60) beibehält, und dass nach Ablauf der definierten Zeitdauer das Kommunikationsendgerät (20) die Verbindung zu der Funkzelle (40, 50, 50) wieder abbricht und eine Verbindung zu der nächsten Funkzelle (40, 50, 60) herstellt.

2. Verfahren nach Anspruch 1, **gekennzeichnet durch** folgende Schritte:
a) Das Kommunikationsendgerät (20) befindet sich in einem Bereitschaftsmodus;
b) Nach Ablauf eines Zeitintervalls, welches in einer im Kommunikationsendgerät (20) vorgesehenen Zeitgebereinheit (30) festgelegt ist, erhält das Kommunikationsendgerät (30) von der Zeitgebereinheit (30) ein Triggersignal und wechselt von dem Bereitschaftsmodus in den Betriebsmodus;
c) Im Betriebsmodus stellt das Kommunikationsendgerät (20) nacheinander eine Verbindung zu der Anzahl von zwei oder mehr Funkzellen (40, 50, 60) mit gleicher und/oder unterschiedlicher Feldstärke her, und behält für die definierte Zeitdauer die Verbindung zu der jeweiligen Funkzelle (40, 50, 60) bei;
d) Nach Ablauf der definierten Zeitdauer bricht das Kommunikationsendgerät (20) die Verbindung zu der Funkzelle (40, 50, 60) wieder ab und stellt die Verbindung zur nächsten Funkzelle (40, 50, 60) her,
e) Nach Abbruch der Verbindung zur letzten Funkzelle (60) wechselt das Kommunikationsendgerät (20) vom Betriebsmodus in den Bereitschaftsmodus zurück und verbleibt im Bereitschaftsmodus bis zum Ablauf des nächsten Zeitintervalls.

3. Verfahren nach Anspruch 1 oder 2, **dadurch gekennzeichnet, dass** das Kommunikationsendgerät (20) zunächst eine Verbindung zu einer ersten Funkzelle (40) herstellt, welche die größte Feldstärke aufweist, dass das Kommunikationsendgerät (209 nach Ablauf der definierten Zeitdauer die Verbindung mit der ersten Funkzelle (40) abbricht, und dass das Kommunikationsendgerät (20) anschließend eine Verbindung mit wenigstens einer weiteren Funkzelle (50, 60) herstellt, welche im Vergleich zur ersten Funkzelle (40) eine gleich große oder schwächere Feldstärke aufweist.

4. Verfahren nach einem der Ansprüche 1 bis 3, **dadurch gekennzeichnet, dass** das Kommunikationsendgerät (20) eine hergestellte Verbindung mit einer Funkzelle (40, 50, 60) für die definierte Zeitdauer zwischen 0.5 und 15 Sekunden, insbesondere zwischen 2 und 10 Sekunden, bevorzugt zwischen 4 und 7 Sekunden, besonders bevorzugt von 5 Sekunden beibehält und/oder dass das Verfahren durchgeführt wird, während sich das Kommunikationsendgerät (20) in einem stationären Zustand befindet.

5. Verfahren zur Erzeugung von Ortungsdaten für die Ortung eines mobilen Kommunikationsendgeräts (20) in einem zellularen Kommunikationsnetz, wobei das Kommunikationsnetz aus einer Anzahl von Funkzellen (40, 50, 60) besteht, und wobei jede Funkzelle (40, 50, 60) einer an einem definierten Standort befindlichen Basisstation (41, 51, 61) zugeordnet ist, wobei netzwerkseitig nacheinander Verbindungs-Herstellungsprozeduren von einem Kommunikationsendgerät (20) mit einer Anzahl von zwei oder mehr Funkzellen (40, 50, 60) mit gleicher und/oder unterschiedlicher Feldstärke erfasst werden, indem das Kommunikationsendgerät (20) mittels eines Verfahrens nach einem der Ansprüche 1 bis 4 nacheinander eine Verbindung mit einer Anzahl von zwei oder mehr Funkzellen (40, 50, 60) gleicher und/oder unterschiedlicher Feldstärke herstellt, dass nach der Herstellung einer Verbindung mit einer Funkzelle (40, 50, 60), netzwerkseitig eine Kennung des die Verbindung herstellenden Kommunikationsendgeräts (20) mit einer Funkzellen-ID der Funkzelle (40, 50, 60) verknüpft wird, wobei die Funkzellen-IDs der einzelnen Funkzellen (40, 50, 60) insbesondere mit geographischen Positionsdaten (43, 53, 63) verknüpft sind, dass zum Zeitpunkt der Verbindungsherstellung und/oder der Verbindungsabbruchs des Kommunikationsendgeräts (20) mit der Funkzelle (40, 50, 60) ein Zeitstempel erzeugt wird, der mit der Kennung des Kommunikationsendgeräts (20) und der Funkzellen-ID zu Ortungsdaten verknüpft wird, und dass die Ortungsdaten netzwerkseitig in einer zentralen Datenbank abgespeichert werden, wobei die zentrale Datenbank insbesondere als zentrales APN-Register ausgebildet ist.

6. Verfahren nach Anspruch 5, **dadurch gekennzeichnet, dass** die Verbindungs-Herstellungsprozeduren mit den zwei oder mehr Funkzellen (40, 50, 60) mit gleicher und/oder unterschiedlicher Feldstärke im Abstand einer definierten Zeitdauer erfasst werden, und dass die definierte Zeitdauer zwischen 0.5 und 15 Sekunden, insbesondere zwischen 2 und 10 Sekunden, bevorzugt zwischen 4 und 7 Sekunden liegt, und besonders bevorzugt 5 Sekunden beträgt.

7. Verfahren nach Anspruch 5 oder 6, **dadurch gekennzeichnet, dass** netzwerkseitig zunächst eine Verbindungs-Herstellungsprozedur von dem Kommunikationsendgerät (20) mit einer erste Funkzelle (40), welche die größte Feldstärke aufweist, erfasst wird, und dass anschließend eine Verbindungs-Herstellungsprozedur von dem Kommunikationsendgerät (20) mit wenigstens einer weiteren Funkzelle (50, 60), welche im Vergleich zur ersten Funkzelle (40) eine gleich große oder schwächere Feldstärke aufweist, erfasst wird.

8. Verfahren nach einem der Ansprüche 5 bis 7, **dadurch gekennzeichnet, dass** Werte über die Feldstärke einer Funkzelle (40, 50, 60) zum Zeitpunkt der Verbindungsherstellung des Kommunikationsendgeräts (20) mit dieser Funkzelle (40, 50, 60) erfasst werden.

9. Verfahren zur Ortung eines mobilen Kommunikationsendgeräts (20) in einem zellularen Kommunikationsnetz, wobei das Kommunikationsnetz (20) aus einer Anzahl von Zellen (40, 50, 60) besteht und wobei jede Zelle (40, 50, 60) einer an einem definierten Standort befindlichen Basisstation (41, 51, 61) zugeordnet ist, wobei die Ortung des Kommunikationsendgeräts (20) netzwerkseitig mittels einer Ortungseinrichtung stattfindet, derart, dass die Ortungseinrichtung auf eine zentrale Datenbank des Kommunikationsnetzes zugreift, in der Ortungsdaten abgespeichert sind, die gemäß einem Verfahren nach einem der Ansprüche 5 bis 8 erzeugt worden sind, in Form von Kennungen von Kommunikationsendgeräten (20), die eine Verbindung zu Funkzellen (40, 50, 60) des Kommunikationsnetzes herstellen, die mit Funkzellen-IDs der eingewählten Funkzelle (40, 50, 60) sowie mit einem Zeitstempel zum Zeitpunkt der Verbindungsherstellung und/oder des Verbindungsabbruchs des Kommunikationsendgeräts (20) mit einer Funkzelle (40, 50, 60) verknüpft sind, dass für ein Kommunikationsendgerät (20) mit einer vorgegebenen Kennung aus den Ortungsdaten Funkzellen-IDs ermittelt werden, bei denen die Zeitstempel in einem definierten zeitlichen Rahmen liegen, und dass aus den ermittelten Funkzellen-IDs die Position (70) des Kommunikationsendgeräts (20) bestimmt wird.

10. Verfahren nach Anspruch 9, **dadurch gekennzeichnet, dass** für das Kommunikationsendgerät (20) mit einer vorgegebenen Kennung Funkzellen-IDs ermittelt werden, bei denen die Zeitstempel in einem definierten zeitlichen Rahmen von kleiner 2 Minuten, bevorzugt in einem zeitlichen Rahmen zwischen 6 und 90 Sekunden, besonders bevorzugt zwischen 15 und 45 Sekunden liegen.

11. Verfahren nach einem der Ansprüche 9 oder 10, **dadurch gekennzeichnet, dass** für das Kommunikationsendgerät (20) mit einer vorgegebenen Kennung aus den Ortungsdaten zunächst eine Funkzellen-ID einer ersten Funkzelle (40), insbesondere der Funkzelle mit der größten Feldstärke, ermittelt wird und dass daraus erste Ortsinformationen bezüglich des Kommunikationsendgeräts (20) erzeugt werden, dass anschließend die Funkzellen-ID wenigstens einer weiteren Funkzelle (50, 60), insbesondere einer Funkzelle mit einer im Vergleich zur ersten Funkzelle (40) gleich großen oder geringeren Feldstärke, ermittelt wird und dass daraus zweite Ortsinformationen bezüglich des Kommunikationsendgeräts (20) erzeugt werden, und dass die zweiten Ortsinformationen zu den ersten Ortsinformationen hinzugefügt werden.

12. Verfahren nach einem der Ansprüche 9 bis 11, **dadurch gekennzeichnet, dass** die Ortungseinrichtung auf eine zentrale Datenbank des Kommunikationsnetzes zugreift, in der Ortungsdaten abgelegt sind, die erzeugt werden, indem ein Kommunikationsendgerät (20) eine Verbindung zu einer Anzahl von zwei oder mehr Funkzellen (40, 50, 60) gleicher und/oder unterschiedlicher Feldstärke hergestellt, dass das Kommunikationsendgerät (20) für eine definierte Zeitdauer die Verbindung zu der entsprechenden Funkzelle (40, 50, 60) beibehält, dass nach Ablauf der definierten Zeitdauer das Kommunikationsendgerät (20) die Verbindung zu der entsprechenden Funkzelle (40, 50, 60) wieder abbricht und eine Verbindung zu der nächsten Funkzelle herstellt, dass nach der Verbindungsherstellung mit einer Funkzelle, insbesondere netzwerkseitig, eine Kennung des die Verbindung herstellenden Kommunikationsendgeräts mit einer Funkzellen-ID der Funkzelle verknüpft wird, dass zum Zeitpunkt der Verbindungsherstellung und/oder des Verbindungsabbruchs des Kommunikationsendgeräts (20) ein Zeitstempel erzeugt wird, der mit der Kennung des Kommunikationsendgeräts (20) und der Funkzellen-ID zur Ortungsdaten verknüpft wird, dass aus den Ortungsdaten einer ersten Funkzelle (40) erste Ortsinformationen bezüglich des Kommunikationsendgeräts erzeugt werden, und dass aus den Ortungsdaten wenigstens einer weiteren Funkzelle (50, 60) wenigstens eine weitere Ortsinformation bezüglich des Kommunikationsendgeräts (20) erzeugt wird, die der ersten Ortsinformation hinzugefügt wird.

13. Verfahren nach Anspruch 11 oder 12, **dadurch gekennzeichnet, dass** aus den zusammengefügten Ortsinformationen bezüglich des Kommunikationsendgeräts (20) ein überlappender Bereich (64) identifiziert wird, wobei sich die Position (70) des Kommunikationsendgeräts (20) im Überlappungsbereich (64) befindet.

14. Kommunikationsendgerät (20) für die Kommunikation in einem zellularen Kommunikationsnetz mit einer Anzahl von Funkzellen (40, 50, 60), aufweisend eine Einrichtung (24, 25) zur Erzeugung elektrischer Energie, ein Gehäuse (21) sowie ein Kommunikationsmodul (28) zur Herstellung einer Kommunikationsverbindung des Kommunikationsendgeräts (20) mit den Funkzellen (40, 50, 60) des Kommunikationsnetzes, wobei das Kommunikationsendgerät (20) eine Verbindungs-Herstellungseinrichtung (29) aufweist, die ausgebildet ist, **dadurch gekennzeichnet dass** das Kommunikationsendgerät (20) nacheinander eine Verbindung zu einer Anzahl von zwei oder mehr Funkzellen (40, 50, 60) mit gleicher und/oder unterschiedlicher Feldstärke herstellt, dass das Kommunikationsendgerät (20) für eine definierte Zeitdauer die Verbindung zu der entsprechenden Funkzelle (40, 50, 60) beibehält, und dass nach Ablauf der definierten Zeitdauer das Kommunikationsendgerät (20) die Verbindung zu der entsprechenden Funkzelle (40, 50, 60) wieder abbricht und eine Verbindung zu der nächsten Funkzelle herstellt.

15. Kommunikationsendgerät nach Anspruch 14, **dadurch gekennzeichnet, dass** das Kommunikationsendgerät (20) eine Zeitgebereinheit (30) aufweist, dass in der Zeitgebereinheit (30) ein Zeitintervall festgelegt ist, nach dessen Ablauf das Kommunikationsendgerät (20) jeweils aus einem Bereitschaftsmodus in einen Betriebsmodus wechselt, und dass die Zeitgebereineinheit (30) eine Triggereinrichtung (31) zum Erzeugen eines Triggersignals am Ende des Zeitintervalls aufweist, bei dem das Kommunikationsendgerät (20) von dem Bereitschaftsmodus in den Betriebsmodus wechselt und dass das Kommunikationsendgerät (20) insbesondere eine Schalteinrichtung (32) zum Umschalten des Kommunikationsendgeräts (20) vom Betriebsmodus zurück in den Bereitschaftsmodus nach Auswahl des Kommunikationsendgeräts (20) aus der letzten Funkzelle (60) aufweist.

16. Kommunikationsendgerät nach Anspruch 14 oder 15, **dadurch gekennzeichnet, dass** dieses Mittel zur Durchführung des Verfahrens nach einem der Ansprüche 2 bis 4 aufweist.

## Claims

1. A method for generating location data for locating a mobile communication end terminal (20) in a cellular communication network, said communication network being comprised of a number of radio cells (40, 50, 60), said communication end terminal (20) successively establishing a connection to a number of two or more radio cells (40, 50, 60) having the same and/or different field strengths, **characterized in that** the communication end terminal (20) maintains the connection to the particular radio cell (40, 50, 60) for a defined time period, and **in that** after the defined time period has elapsed, the communication terminal (20) terminates the connection to the radio cell (40, 50, 60) and establishes a connection to the next radio cell (40, 50, 60).

2. The method according to claim 1, **characterized by** the following steps:
a) the communication end terminal (20) is in a ready mode;
b) after the lapse of a time interval that is set in a clock unit (30) provided in the communication end terminal (20), the communication end terminal (30) receives a trigger signal from the clock unit (30) and switches from ready mode into operating mode;
c) in operating mode, the communication end terminal (20) successively establishes a connection to the number of two or more radio cells (40, 50, 60) having the same and/or different field strengths, and maintains the connection to the particular radio cell (40, 50, 60) for the defined time period;
d) after the defined time period has elapsed, the communication end terminal (20) terminates the connection to the radio cell (40, 50, 60) and establishes the connection to the next radio cell (40, 50, 60);
e) after termination of the connection to the last radio cell (60), the communication end terminal (20) switches from operating mode back into ready mode and remains in ready mode until the next time interval has elapsed.

3. The method according to claim 1 or 2, **characterized in that** the communication end terminal (20) first establishes a connection to a first radio cell (40) having the highest field strength, **in that** after the defined time period has elapsed, the communication end terminal (20) terminates the connection to the first radio cell (40), and **in that** the communication end terminal (20) then establishes a connection to at least one other radio cell (50, 60) whose field strength is equal to or weaker than that of the first radio cell (40).

4. The method according to anyone of claims 1 to 3, **characterized in that** the communication end terminal (20) maintains an established connection to a radio cell (40, 50, 60) for the defined time period of between 0.5 and 15 seconds, particularly between 2 and 10 seconds, preferably between 4 and 7 seconds, particularly preferably of 5 seconds and/or **in that** said method is performed while the communication end terminal (20) is in a stationary state.

5. A method for generating location data for locating a mobile communication end terminal (20) in a cellular communication network, said communication network being comprised of a number of radio cells (40, 50, 60) and each radio cell (40, 50, 60) being assigned to a base station (41, 51, 61) located at a defined location, whereby connection establishment procedures performed by a communication end terminal (20) to connect to a number of two or more radio cells (40, 50, 60) having the same and/or different field strengths are detected successively on the network side, wherein the communication end terminal (20), by means of a method according to anyone of claims 1 to 4, successively establishes a connection to the number of two or more radio cells (40, 50, 60) having the same and/or different field strengths, in that after the establishment of a connection to a radio cell (40, 50, 60), an identifier of the communication end terminal (20) establishing the connection is linked on the network side to a radio cell ID of the radio cell (40, 50, 60), whereby the radio cell IDs of the individual radio cells (40, 40, 60) are particularly linked to geographical position data (43, 53, 63), in that at the instant of connection establishment and/or connection termination by the communication end terminal (20) to a radio cell (40, 50, 60), a time stamp is generated that is linked to the identifier of the communication end terminal (20) and to the radio cell ID to form location data, and in that the location data are stored in a central database on the network side, said central database being particularly configured as a central APN-register.

6. The method according to claim 5, **characterized in that** the connection establishment procedures for connecting to the two or more radio cells (40, 50, 60) having the same and/or different field strengths are detected at a defined time interval, and **in that** the defined time interval is between 0.5 and 15 seconds, particularly between 2 and 10 seconds, preferably between 4 and 7 seconds, and particularly preferably is 5 seconds.

7. The method according to claim 5 or 6, **characterized in that** on the network side, a connection establishment procedure performed by the communication end terminal (20) to connect to a first radio cell (40) having the highest field strength is first detected, and **in that** a connection establishment procedure performed by the communication end terminal (20) to connect to at least one other radio cell (50, 60) whose field strength is equal to or weaker than that of the first radio cell (40) is then detected.

8. The method according to anyone of claims 5 to 7, **characterized in that** values about the field strength of a radio cell (40, 50, 60) are detected at the time of the connection establishment of the communication end terminal (20) with this radio cell (40, 50, 60).

9. A method for locating a mobile communication end terminal (20) in a cellular communication network, said communication network (20) being comprised of a number of radio cells (40, 50, 60) and each cell (40, 50, 60) being assigned to a base station (41, 51, 61) located at a defined location, whereby the locating of the communication end terminal (20) takes place on the network side by means of a locating device in such manner that the locating device accesses a central database of the communication network, in which central database the location data are stored, which have been generated with a method according to anyone of claims 5 to 8, in the form of identifiers of communication end terminals (20) establishing a connection to radio cells (40, 50, 60) of the communication network, which are linked to radio cell IDs of the radio cell (40, 50, 60) dialed into and to a time stamp at the instant of the connection establishment and/or of the connection termination by the communication end terminal (20) to a radio cell (40, 50, 60), in that for a communication end terminal (20) having a predefined identifier, radio cell IDs are determined from the location data, for which the time stamps fall within a defined timeframe, and in that from the determined radio cell IDs the position (70) of the communication end terminal (20) is determined.

10. The method according to claim 9, **characterized in that** for the communication end terminal (20) having a predefined identifier, radio cell IDs are determined for which the time stamps fall within a defined timeframe of less than 2 minutes, preferably within a timeframe of between 6 and 90 seconds, particularly preferably between 15 and 45 seconds.

11. The method according to claim 9 or 10, **characterized in that** for the communication end terminal (20) having a predefined identifier, from the location data at first a radio cell ID of a first radio cell (40) is determined, particularly of the radio cell with the highest field strength, and **in that** from this are generated first location information items relating to the communication end terminal (20) are generated, **in that** the radio cell ID of at least one other radio cell (50, 60), particularly of a radio cell whose field strength is equal to or less than that of the first radio cell (40), is then determined and **in that** from this are generated second location information items relating to the communication end terminal (20) are generated, and **in that** the second location information items are added to the first location information items.

12. The method according to anyone of claims 9 to 11, **characterized in that** the locating device accesses a central database of the communication network, in which central database are deposited the location data generated by the establishment of a connection by a communication end terminal (20) to a number of two or more radio cells (40, 50, 60) of equal and/or different field strengths, **in that** the communication end terminal (20) maintains the connection to the corresponding radio cell (40, 50, 60) for a defined time period, **in that** after the defined time period has elapsed, the communication end terminal (20) terminates the connection to the corresponding radio cell (40, 50, 60) and establishes a connection to the next radio cell, **in that** after the establishment of a connection to a radio cell, an identifier of the communication end terminal establishing the connection is linked, particularly on the network side, to a radio cell ID of the radio cell, **in that** at the instant of the connection establishment and/or of the connection termination by the communication end terminal (20), a time stamp is generated, which is linked to the identifier of the communication end terminal (20) and to the radio cell ID to form location data, **in that** from the location data of a first radio cell (40) first location information items relating to the communication end terminal are generated, and **in that** from the location data of at least one additional radio cell (50, 60), at least one additional location information item relating to the communication end terminal (20) is generated, which is added to the first location information item.

13. The method according to claim 11 or 12, **characterized in that** from the combined location information items relating to the communication end terminal (22) an overlapping region (64) is identified, wherein the position (70) of the communication end terminal (20) being located in the overlap region (64).

14. A communication end terminal (20) for communication in a cellular communication network comprising a number of radio cells (40, 50, 60), said communication terminal comprising a device (24, 25) for generating electrical energy, a case (21), and a communication module (28) for establishing a communication connection of the communication end terminal (20) to the radio cells (40, 50, 60) of the communication network, whereby the communication end terminal (20) comprises a connection establishing device (29), **characterized in that** the connection establishing device (29) is designed to enable the communication end terminal (20) to successively establish a connection to a number of two or more radio cells (40, 50, 60) having the same and/or different field strengths, **in that** the communication end terminal (20) maintains the connection to the corresponding radio cell (40, 50, 60) for a defined time period, and **in that** after the defined time period has elapsed, the communication end terminal (20) terminates the connection to the corresponding radio cell (40, 50, 60) and establishes a connection to the next radio cell.

15. The communication end terminal according to claim 14" **characterized in that** the communication end terminal (20) comprises a clock unit (30), **in that** set in the clock unit (30) is a time interval after the lapse of which the communication end terminal (20) switches in each case from a ready mode into an operating mode, and **in that** the clock unit (30) comprises a triggering device (31) for generating a trigger signal at the end of the time interval, at which the communication end terminal (20) switches from the ready mode into the operating mode, and **in that** in particular the communication end unit (20) comprises a switching device (32) for switching the communication end terminal (20) from operating mode back into ready mode after the communication end terminal (20) dials out of the last radio cell (60).

16. The communication end terminal according to claim 14 or 15, **characterized in that** it comprises means for performing the method according to anyone of claims 2 to 4.

## Revendications

1. Procédé de création de données de localisation pour la localisation d'un terminal de communication (20) mobile dans un réseau de communication cellulaire, dans lequel le réseau de communication est constitué par un certain nombre de cellules radio (40, 50, 60), le terminal de communication (20) établit successivement une liaison à un nombre de deux cellules radio (40, 50, 60) ou plus avec une intensité de champ identique et/ou différente, **caractérisé en ce**
**que** le terminal de communication (20) maintient pendant une durée définie la liaison à la cellule radio (40, 50, 60) respective, et qu'après l'expiration de la durée définie, le terminal de communication (20) interrompt de nouveau la liaison à la cellule radio (40, 50, 50) et établit une liaison à la cellule radio (40, 50, 60) suivante.

2. Procédé selon la revendication 1, **caractérisé par** les étapes suivantes :
a) le terminal de communication (20) se trouve dans un mode d'attente ;
b) après l'expiration d'un intervalle de temps, qui est défini dans une unité d'horloge (30) prévue dans le terminal de communication (20), le terminal de communication (30) reçoit de l'unité d'horloge (30) un signal de déclenchement et passe du mode d'attente au mode de fonctionnement ;
c) dans le mode de fonctionnement, le terminal de communication (20) établit successivement une liaison au nombre de deux cellules radio (40, 50, 60) ou plus avec une intensité de champ identique et/ou différente et maintient pendant la durée définie la liaison à la cellule radio (40, 50, 60) respective ;
d) après l'expiration de la durée définie, le terminal de communication (20) interrompt de nouveau la liaison à la cellule radio (40, 50, 60) et établit la liaison à la cellule radio (40, 50, 60) suivante,
e) après l'interruption de la liaison à la dernière cellule radio (60), le terminal de communication (20) repasse du mode de fonctionnement au mode d'attente et demeure dans le mode d'attente jusqu'à l'expiration du prochain intervalle de temps.

3. Procédé selon la revendication 1 ou 2, **caractérisé en ce que** le terminal de communication (20) établit d'abord une liaison à une première cellule radio (40) qui présente la plus grande intensité de champ, **en ce que** le terminal de communication (20) interrompt après l'expiration de la durée définie la liaison à la première cellule radio (40) et **en ce que** le terminal de communication (20) établit ensuite une liaison avec au moins une autre cellule radio (50, 60) qui, en comparaison à la première cellule radio (40), présente une intensité de champ égale ou inférieure.

4. Procédé selon l'une quelconque des revendications 1 à 3, **caractérisé en ce que** le terminal de communication (20) maintient une liaison établie avec une cellule radio (40, 50, 60) pendant la durée définie entre 0,5 et 15 secondes, en particulier entre 2 et 10 secondes, de préférence entre 4 et 7 secondes, de manière particulièrement préférée pendant 5 secondes et/ou **en ce que** le procédé est exécuté pendant que le terminal de communication (20) se trouve dans un état stationnaire.

5. Procédé de création de données de localisation pour la localisation d'un terminal de communication mobile (20) dans un réseau de communication cellulaire, dans lequel le réseau de communication est constitué par un certain nombre de cellules radio (40, 50, 60), et dans lequel chaque cellule radio (40, 50, 60) est associée à une station de base (41, 51, 61) se trouvant en un lieu défini, dans lequel des procédures successives d'établissement de liaison du côté réseau par un terminal de communication (20) avec un certain nombre de deux cellules radio (40, 50, 60) ou plus avec une intensité de champ identique et/ou différente sont détectées, le terminal de communication (20) établissant au moyen d'un procédé selon l'une quelconque des revendications 1 à 4 successivement une liaison avec un certain nombre de deux cellules radio (40, 50, 60) ou plus ayant une intensité de champ identique et/ou différente, en ce qu'après l'établissement d'une liaison avec une cellule radio (40, 50, 60), du côté réseau un code du terminal de communication (20) établissant la liaison est combiné à un identifiant de cellule radio de la cellule radio (40, 50, 60), dans lequel les identifiants de cellule radio des différentes cellules radio (40, 50, 60) sont en particulier combinés à des données de position géographiques (43, 53, 63), en ce qu'au moment de l'établissement de la liaison et/ou de l'interruption de la liaison du terminal de communication (20) avec la cellule radio (40, 50, 60), est générée une estampille temporelle qui, avec le code du terminal de communication (20) et avec l'identifiant de cellule radio, est combinée à des données de localisation, et en ce que les données de localisation sont enregistrées, du côté réseau, dans une banque de données centrale, dans lequel la banque de données centrale est conçue en particulier en tant que registre central d'un APN.

6. Procédé selon la revendication 5, **caractérisé en ce que** les procédures d'établissement de liaison avec les deux cellules radio (40, 50, 60) ou plus avec une intensité de champ identique et/ou différente sont détectées selon un intervalle d'une durée définie, et **en ce que** la durée définie est entre 0,5 et 15 secondes, en particulier entre 2 et 10 secondes, de préférence entre 4 et 7 secondes, de manière particulièrement préférée est de 5 secondes.

7. Procédé selon la revendication 5 ou 6, **caractérisé en ce que**, côté réseau, est détectée d'abord une procédure d'établissement de liaison par le terminal de communication (20) avec une première cellule radio (40), qui présente la plus grande intensité de champ, et **en ce que**, ensuite est détectée une procédure d'établissement de liaison par le terminal de communication (20) avec au moins une autre cellule radio (50, 60) qui, en comparaison à la première cellule radio (40), présente une intensité de champ égale ou inférieure.

8. Procédé selon l'une quelconque des revendications 5 à 7, **caractérisé en ce que** des valeurs sur l'intensité de champ d'une cellule radio (40, 50, 60) sont détectées au moment de l'établissement de la liaison par le terminal de communication (20) avec cette cellule radio (40, 50, 60).

9. Procédé de localisation d'un terminal de communication (20) mobile dans un réseau de communication cellulaire, dans lequel le réseau de communication (20) est constitué par un certain nombre de cellules (40, 50, 60) et dans lequel chaque cellule (40, 50, 60) est attribuée à une station de base (41, 51, 61) se trouvant en un lieu défini, dans lequel la localisation du terminal de communication (20) a lieu du côté réseau au moyen d'un dispositif de localisation de manière que le dispositif de localisation accède à une banque de données centrale du réseau de communication dans laquelle sont enregistrées des données de localisation qui ont été créées conformément à un procédé selon l'une quelconque des revendications 5 à 8, sous la forme de codes de terminaux de communication (20), qui créent une liaison à des cellules radio (40, 50, 60) du réseau de communication, qui sont combinées avec des identifiants de cellules radio de la cellule radio (40, 50, 60) appelée ainsi qu'avec une estampille temporelle au moment de l'établissement de la liaison et/ou de l'interruption de la liaison par le terminal de communication (20) avec une cellule radio (40, 50, 60), en ce que, pour un terminal de communication (20) avec un code prédéfini sont déterminés, à partir des données de localisation, des identifiants de cellules radio pour lesquels l'estampille temporelle se trouve dans un cadre temporel défini, et en ce que la position (70) du terminal de communication (20) est déterminée à partir des identifiants de cellules radio déterminés.

10. Procédé selon la revendication 9, **caractérisé en ce que**, pour le terminal de communication (20) avec un code prédéfini, sont déterminés des identifiants de cellule radio pour lesquels les estampilles temporelles se trouvent dans un cadre temporel défini inférieur à 2 minutes, de préférence dans un cadre temporel entre 6 et 90 secondes, de manière particulièrement préférée entre 15 et 45 secondes.

11. Procédé selon l'une quelconque des revendications 9 ou 10, **caractérisé en ce que**, pour le terminal de communication (20) avec un code prédéfini, un identifiant de cellule radio d'une première cellule radio (40), en particulier de la cellule radio avec la plus grande intensité de champ, est d'abord déterminé à partir des données de localisation et **en ce que**, d'après de cela, des premières informations de lieu relatives au terminal de communication (20) sont créées, **en ce que**, ensuite, l'identifiant de cellule radio d'au moins une autre cellule radio (50, 60), en particulier d'une cellule radio avec une intensité de champ égale ou inférieure en comparaison à la première cellule radio (40), est déterminé et **en ce que**, d'après cela, des secondes informations de lieu relatives au terminal de communication (20) sont créées, et **en ce que** les secondes informations de lieu sont ajoutées aux premières informations de lieu.

12. Procédé selon l'une quelconque des revendications 9 à 11, **caractérisé en ce que** le dispositif de localisation accède à une banque de données centrale du réseau de communication, dans laquelle sont déposées des données de localisation, qui sont créées par le fait qu'un terminal de communication (20) établit une liaison à un certain nombre de deux cellules radio (40, 50, 60) ou plus ayant une intensité de champ identique et/ou différente, **en ce que** le terminal de communication (20) maintient pendant une durée définie la liaison à la cellule radio (40, 50, 60) correspondante, **en ce que**, après l'expiration de la durée définie, le terminal de communication (20) interrompt de nouveau la liaison à la cellule radio (40, 50, 60) correspondante et crée une liaison à la cellule radio suivante, **en ce que**, après l'établissement de la liaison avec une cellule radio, en particulier du côté du réseau, un code du terminal de communication créant la liaison est combiné à un identifiant de cellule radio de la cellule radio, **en ce que**, au moment de l'établissement de liaison et/ou de l'interruption de liaison par le terminal de communication (20), est créée une estampille temporelle qui, avec le code du terminal de communication (20) et avec l'identifiant de cellule radio, est combinée aux données de localisation, **en ce que**, à partir des données de localisation d'une première cellule radio (40), est créée une première information de lieu relative au terminal de communication, et **en ce que**, à partir des données de localisation d'au moins une autre cellule radio (50, 60), est créée au moins une autre information de lieu relative au terminal de communication (20) qui est ajoutée à la première information de lieu.

13. Procédé selon la revendication 11 ou 12, **caractérisé en ce que**, à partir des informations de lieu rassemblées liées au terminal de communication (20), est identifiée une zone de recoupement (64), dans lequel la position (70) du terminal de communication (20) se trouve dans la zone de recoupement (64).

14. Terminal de communication (20) pour la communication dans un réseau de communication cellulaire avec un certain nombre de cellules radio (40, 50, 60), présentant un dispositif (24, 25) pour la génération d'une énergie électrique, un boîtier (21) ainsi qu'un module de communication (28) pour l'établissement d'une liaison de communication du terminal de communication (20) avec les cellules radio (40, 50, 60) du réseau de communication, dans lequel le terminal de communication (20) présente un dispositif d'établissement de liaison (29) qui est conçu, **caractérisé en ce que** le terminal de communication (20) établit successivement une liaison à un certain nombre de deux cellules radio (40, 50, 60) ou plus avec une intensité de champ identique et/ou différente, **en ce que** le terminal de communication (20) maintient pendant une durée définie la liaison à la cellule radio (40, 50, 60) correspondante, et **en ce que**, après expiration de la durée définie, le terminal de communication (20) interrompt de nouveau la liaison à la cellule radio (40, 50, 60) correspondante et établit une liaison à la cellule radio suivante.

15. Terminal de communication selon la revendication 14, **caractérisé en ce que**, le terminal de communication (20) présente une unité d'horloge (30), **en ce que**, dans l'unité d'horloge (30), est spécifié un intervalle de temps après l'expiration duquel le terminal de communication (20) passe respectivement d'un mode d'attente à un mode de fonctionnement, et **en ce que** l'unité d'horloge (30) présente un dispositif de déclenchement (31) pour la création d'un signal de déclenchement à la fin de l'intervalle de temps, avec lequel le terminal de communication (20) passe du mode d'attente au mode de fonctionnement et **en ce que** le terminal de communication (20) présente en particulier un dispositif de commutation (32) pour commuter de nouveau le terminal de communication (20) du mode de fonctionnement au mode d'attente après la sélection du terminal de communication (20) à partir de la dernière cellule radio (60).

16. Terminal de communication selon la revendication 14 ou 15, **caractérisé en ce que** celui-ci présente des moyens pour l'exécution du procédé selon l'une quelconque des revendications 2 à 4.
